(19) Europäisches Patentamt
European Patent Office
Office européen des brevets

(11) **EP 4 507 425 A1**

(12) **EUROPEAN PATENT APPLICATION**
published in accordance with Art. 153(4) EPC

(43) Date of publication:
**12.02.2025  Bulletin 2025/07**

(21) Application number: 23778521.7

(22) Date of filing: **31.03.2023**

(51) International Patent Classification (IPC):
*H04W 72/04* (2023.01)     *H04W 74/08* (2024.01)

(52) Cooperative Patent Classification (CPC):
**H04W 72/04; H04W 74/08**

(86) International application number:
**PCT/CN2023/085798**

(87) International publication number:
**WO 2023/186157 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **02.04.2022   CN 202210346938**

(71) Applicant: **Vivo Mobile Communication Co., Ltd.
Dongguan, Guangdong 523863 (CN)**

(72) Inventors:
• **YANG, Kun**
  **Dongguan, Guangdong 523863 (CN)**
• **PAN, Xueming**
  **Dongguan, Guangdong 523863 (CN)**
• **WU, Kai**
  **Dongguan, Guangdong 523863 (CN)**

(74) Representative: **Shieldmark**
**P.O. Box 90471**
**2509 LL The Hague (NL)**

(54) **RANDOM ACCESS RESOURCE CONFIGURATION METHOD, APPARATUS, TERMINAL AND NETWORK SIDE DEVICE**

(57)     This application discloses a random access resource configuration method and apparatus, a terminal, and a network-side device, pertaining to the field of mobile communication. The random access resource configuration method in embodiments of this application includes: receiving, by a terminal, first configuration information from a network-side device, where the first configuration information is used for configuring a first RO resource set and/or a second RO resource set for random access signal repetition transmission; determining, by the terminal, an association relationship of RO resources in the first RO resource set and/or the second RO resource set; and determining, by the terminal, N RO resources based on the association relationship of the RO resources to perform N random access signal repetition transmissions; where the first RO resource set includes at least one of the following: a RO resource for 4-step RACH; a RO resource for 2-step RACH; and a RO resource for Msg3 repetition transmission; and the second RO resource set includes dedicated RO resources for random access signal repetition transmission.

S210

A terminal receives first configuration information from a network-side device, where the first configuration information is used for configuring a first random access occasion resource set and/or a second random access occasion resource set for random access signal repetition transmission

S220

The terminal determines an association relationship of random access occasion resources in the first random access occasion resource set and/or the second random access occasion resource set

S230

The terminal determines N random access occasion resources based on the association relationship of the random access occasion resources in the first random access occasion resource set and/or the second random access occasion resource set to perform N random access signal repetition transmissions

FIG. 2

## Description

## CROSS-REFERENCE TO RELATED APPLICATIONS

The present invention claims priority to Chinese Patent Application No. 202210346938.3, filed with the China National Intellectual Property Administration on April 2, 2022 and entitled "RANDOM ACCESS RESOURCE CONFIGURATION METHOD AND APPARATUS, TERMINAL, AND NETWORK-SIDE DEVICE", which is incorporated herein by reference in its entirety.

## TECHNICAL FIELD

This application pertains to the field of mobile communication technologies, and specifically relates to a random access resource configuration method and apparatus, a terminal, and a network-side device.

## BACKGROUND

Coverage performance of uplink signals in the random access (Random Access) procedure in the new radio (New Radio, NR) system, such as message 1 (Msg1) in the 4-step random access channel (4-step Radom Access Channel, 4-step RACH) procedure, is relatively poor compared with other channels. Therefore, it is necessary to introduce Msg1 repetition transmission in physical random access channel (Physical Random Access Channel, PRACH) to improve the coverage performance of Msg1.

Optional values of an association period (Association Period) between synchronization signal block (Synchronization Signal Block, SSB) and random access occasion (RACH Occasion, RO) may be 10ms, 20ms, 40ms, 80ms, and 160ms. A maximum length of a corresponding random access response (Random Access Response, RAR) monitoring window is 10ms. Therefore, a time length of the association period may be longer than the RAR monitoring window. In this case, if ROs in multiple association periods are still used to implement Msg1 repetition transmission, a time interval for each transmission of Msg1 will be longer than the RAR monitoring window. If only existing PRACH resources are used for Msg1 repetition transmission, the transmission time interval of Msg1 is excessively long, which is equivalent to repeated attempts to perform a single transmission of Msg1 for multiple times, resulting in a longer delay of the terminal access procedure. An excessively long transmission interval also affects diversity gains of Msg1 repetition transmission. During transmission of Msg1, an appropriate downlink reference beam is selected based on a reference signal received power (Reference Signal Received Power, RSRP) of SSB, and a downlink parameter, namely beam validity, may expire due to an excessively long time interval.

The existing RO resources do not support random access signal repetition transmission for multiple times, and cannot effectively improve diversity gains brought by repetition transmission.

## SUMMARY

Embodiments of this application provide a random access resource configuration method and apparatus, a terminal, and a network-side device, which can resolve the problem that existing RO resources do not support random access signal repetition transmission for a plurality of times and cannot effectively improve diversity gains brought by repetition transmission.

According to a first aspect, a random access resource configuration method is provided, applied to a terminal, where the method includes:

receiving, by a terminal, first configuration information from a network-side device, where the first configuration information is used for configuring a first RO resource set and/or a second RO resource set for random access signal repetition transmission;
determining, by the terminal, an association relationship of RO resources in the first RO resource set and/or the second RO resource set; and
determining, by the terminal, N RO resources based on the association relationship of the RO resources in the first RO resource set and/or the second RO resource set to perform N random access signal repetition transmissions; where
the first RO resource set includes at least one of the following RO resources:

a RO resource for 4-step RACH;
a RO resource for 2-step RACH; and
a RO resource for 4-step RACH for Msg3 repetition transmission; and
the second RO resource set includes dedicated RO resources for random access signal repetition transmission; where
N is a positive integer.

According to a second aspect, a random access resource configuration apparatus is provided, including:

a receiving module, configured to receive first configuration information from a network-side device, where the first configuration information is used for configuring a first RO resource set and/or a second RO resource set for random access signal repetition transmission;
an association module, configured to determine an association relationship of RO resources in the first RO resource set and/or the second RO resource set; and
a transmission module, configured to determine N RO resources based on the association relationship of the RO resources in the first RO resource set and/or the second RO resource set to perform N random access signal repetition transmissions; where

the first RO resource set includes at least one of the following RO resources:

a RO resource for 4-step RACH;
a RO resource for 2-step RACH; and
a RO resource for 4-step RACH for Msg3 repetition transmission; and
the second RO resource set includes dedicated RO resources for random access signal repetition transmission; where
N is a positive integer.

According to a third aspect, a random access resource configuration method is provided, applied to a network-side device, where the method includes:

transmitting, by a network-side device, first configuration information to a terminal, where the first configuration information is used for configuring a first RO resource set and/or a second RO resource set for random access signal repetition transmission;
determining, by the network-side device, an association relationship of RO resources in the first RO resource set and/or the second RO resource set; and
receiving, by the network-side device, N random access signal repetition transmissions from the terminal on N RO resources; where
the N RO resources are determined based on an association relationship of the first RO resource set and/or the second RO resource set;
the first RO resource set includes at least one of the following RO resources:

a RO resource for 4-step RACH;
a RO resource for 2-step RACH; and
a RO resource for 4-step RACH for Msg3 repetition transmission; and
the second RO resource set includes dedicated RO resources for random access signal repetition transmission; where
N is a positive integer.

According to a fourth aspect, a random access resource configuration apparatus is provided, including:

a transmitting module, configured to transmit first configuration information to a terminal, where the first configuration information is used for configuring a first RO resource set and/or a second RO resource set for random access signal repetition transmission;
an execution module, configured to determine an association relationship of RO resources in the first RO resource set and/or the second RO resource set; and
an access module, configured to receive N random access signal repetition transmissions from the terminal on N RO resources; where
the N RO resources are determined based on an association relationship of the first RO resource set and/or the second RO resource set;
the first RO resource set includes at least one of the following RO resources:

a RO resource for 4-step RACH;
a RO resource for 2-step RACH; and
a RO resource for 4-step RACH for Msg3 repetition transmission; and
the second RO resource set includes dedicated RO resources for random access signal repetition transmission; where
N is a positive integer.

According to a fifth aspect, a terminal is provided, where the terminal includes a processor and a memory, and a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to determine an association relationship of RO resources in a first RO resource set and/or a second RO resource set, and the communication interface is configured to receive first configuration information from a network-side device, where the first configuration information is used for configuring a first RO resource set and/or a second RO resource set for random access signal repetition transmission; and determine N RO resources based on the association relationship of the RO resources in the first RO resource set and/or the second RO resource set to perform N random access signal repetition transmissions.

According to a seventh aspect, a network-side device is provided, where the network-side device includes a processor and a memory, and a program or instructions capable of running on the processor are stored in the memory. When the program or the instructions are executed by the processor, the steps of the method according to the third aspect are implemented.

According to an eighth aspect, a network-side device is provided, including a processor and a communication interface. The processor is configured to determine an association relationship of RO resources in a first RO resource set and/or a second RO resource set. The communication interface is configured to transmit first configuration information to a terminal, where the first configuration information is used for configuring the first RO resource set and/or the second RO resource set for random access signal repetition transmission; and receive N random access signal repetition transmissions from the terminal on N RO resources.

According to a ninth aspect, a random access resource configuration system is provided, including a terminal and a network-side device, where the terminal can be configured to execute the steps of the random access resource configuration method according to the first aspect, and the network-side device can be configured to execute the steps of the random access resource configuration method according to the third aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the third aspect.

According to a twelfth aspect, a computer program/program product is provided, where the computer program/program product is stored in a storage medium, and the computer program/program product is executed by at least one processor to implement the steps of the random access resource configuration method according to the first aspect or the steps of the random access resource configuration method according to the third aspect.

According to the embodiments of this application, the terminal determines X first RO resources in the first RO resource set and Y second RO resources in the second RO resource set according to the first condition in a case that the network-side device configures the first RO resource set and the second RO resource set for the terminal, and then determines the association relationship between the X first RO resources and the Y second RO resources, to support random access signal repetition transmission for a larger repetition count and obtain better diversity gains. In addition, with combination of different RO resources, the system can efficiently utilize RO resources.

## BRIEF DESCRIPTION OF DRAWINGS

FIG. 1 is a schematic structural diagram of a wireless communication system to which the embodiments of this application are applicable;
FIG. 2 is a schematic flowchart of a random access resource configuration method according to an embodiment of this application;
FIG. 3 is a schematic diagram of configuration of a random access resource according to an embodiment of this application;
FIG. 4 is another schematic flowchart of a random access resource configuration method according to an embodiment of this application;
FIG. 5 is a schematic diagram of another configuration of a random access resource according to an embodiment of this application;
FIG. 6 is a schematic diagram of another configuration of a random access resource according to an embodiment of this application;
FIG. 7 is a schematic structural diagram of a random access resource configuration apparatus according to an embodiment of this application;
FIG. 8 is another schematic flowchart of a random access resource configuration method according to an embodiment of this application;
FIG. 9 is another schematic structural diagram of a random access resource configuration apparatus according to an embodiment of this application;
FIG. 10 is a schematic structural diagram of a communication device according to an embodiment of this application;
FIG. 11 is a schematic structural diagram of a terminal for implementing the embodiments of this application; and
FIG. 12 is a schematic structural diagram of a network-side device for implementing the embodiments of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

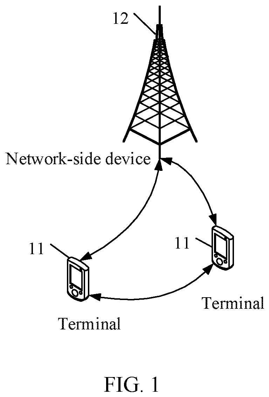

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

With reference to the accompanying drawings, the following describes in detail, by using some embodiments and application scenarios thereof, a random access resource configuration method and apparatus, a terminal, and a network-side device provided in the embodiments of this application.

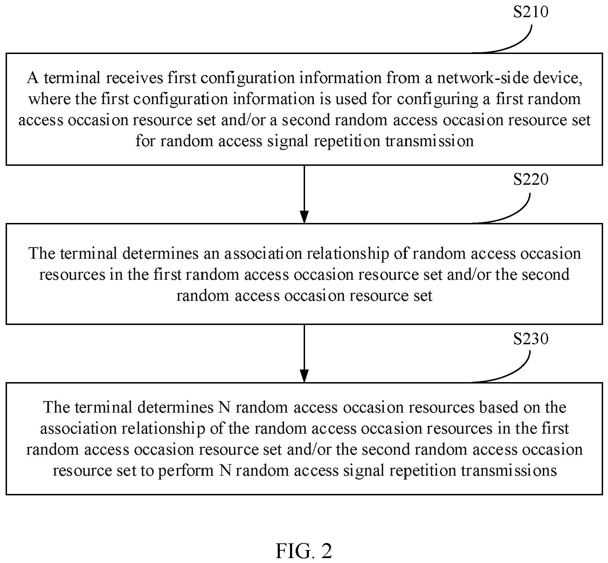

As shown in FIG. 2, an embodiment of this application provides a random access resource configuration method, and the execution body of the method is a terminal, in other words, the method can be executed by software or hardware installed in the terminal.

The method includes the following steps:

S210: The terminal receives first configuration information from a network-side device, where the first configuration information is used for configuring a first RO resource set and/or a second RO resource set for random access signal repetition transmission.

The first RO resource set includes at least one of the following RO resources:

a RO resource for 4-step RACH;

a RO resource for 2-step random access (2-step RACH); and

a RO resource for 4-step RACH for message 3 (Msg3) repetition transmission (for requesting Msg3 repetition).

It should be understood that the random access signal repetition transmission may be Msg1 repetition transmission for 4-step RACH, and the first RO resource information and the second RO resource set include RO resources that may be used for Msg1 repetition transmission for 4-step RACH.

It should be understood that the RO resource for random access signal repetition transmission may be multiplexed with at least one of the RO resource for 4-step RACH, the RO resource for 2-step RACH or the RO resource for Msg3 repetition transmission. The first RO resource set may be obtained by dividing a preamble resource set corresponding to at least one of the foregoing RO resources. For example, in a case that the terminal supports 4-step RACH and is configured with RO resources for 4-step RACH, the first RO resource set may include the RO resources for 4-step RACH, and preambles corresponding to the RO resources for 4-step RACH in the first RO resource set may be used for random access signal repetition transmission, that is, for Msg1 repetition transmission. In a case that the terminal supports 2-step RACH and is configured with RO resources for 2-step RACH, the first RO resource set may alternatively include the RO resources for 2-step RACH, and preamble resources corresponding to the RO resources for 2-step RACH in the first RO resource set may be used for random access signal repetition transmission, that is, for Msg1 repetition transmission. In a case that the terminal supports Msg3 repetition transmission and is configured with RO resources for Msg3 repetition transmission, the first RO resource set may alternatively include the RO resources for Msg3 repetition transmission, and preamble resources corresponding to the RO resources for Msg3 repetition transmission in the first RO resource set may be used for random access signal repetition transmission, that is, for Msg1 repetition transmission.

The network-side device may alternatively configure a corresponding first RO resource set for each type of RO resource.

In an implementation, the network-side device may configure, for the terminal, a first RO resource set including RO resources for 4-step RACH and/or a second RO resource set including dedicated RO resources.

In another implementation, the network-side device may configure, for the terminal, a first RO resource set including RO resources for 2-step RACH and/or a second RO resource set including dedicated RO resources.

In another implementation, the network-side device may configure, for the terminal, a first RO resource set including RO resources for Msg3 repetition transmission and/or a second RO resource set including dedicated RO resources.

In another implementation, the network-side device may configure, for the terminal, a first RO resource set including RO resources for 4-step RACH and RO resources for Msg3 repetition transmission and/or a second RO resource set including dedicated RO resources.

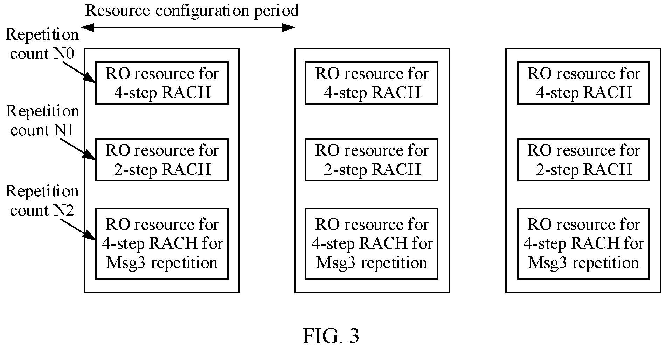

As shown in FIG. 3, optionally, the network-side device divides sets of RO resources for 4-step RACH, RO resources for 2-step RACH, and RO resources for Msg3 repetition transmission to obtain the first RO resource set for Msg1 repetition transmission, and also configures corresponding repetition count N0, N1, and N2 for each type of first RO resource, where N0, N1, and N2 may be the same or different.

However, for simplicity, the descriptions in the following embodiments all use an example in which the network-side device configures, for the terminal, a first RO resource set including RO resources for 4-step RACH and/or a second RO resource set including dedicated RO resources.

The second RO resource set includes dedicated RO resources for only random access signal repetition transmission.

It should be understood that the first configuration information transmitted by the network-side device to the terminal may include a first message and/or a second message based on actual requirements, where the first message is used to configure the first RO resource set for the terminal and the second message is used to configure the second RO resource set for the terminal.

S220: The terminal determines an association relationship of RO resources in the first RO resource set and/or the second RO resource set.

Further, the step S220 includes determining at least one of the following association relationships:

an association relationship between RO resources in the first RO resource set;

an association relationship between RO resources in the second RO resource set; and

an association relationship between RO resources in the first RO resource set and the second RO resource set.

It should be understood that there are many manners of determining the association relationship, which may be determined according to a predefined mapping criterion (mapping criteria), which is also referred to as association criterion (association criteria), or based on association identification information. The association relationship may be used to represent associated RO resources, and may alternatively represent association information of RO resources with an association relationship, for example, being used for a same Msg1 repetition transmission, corresponding to a same repetition count, or corresponding to a same SSB or SSB set.

S230: The terminal determines N RO resources based on the association relationship of the RO resources in the first RO resource set and/or the second RO resource set to perform N random access signal repetition transmissions; where N is a positive integer.

The terminal may determine N RO resources meeting random access signal repetition transmissions from the associated first RO resources and/or second RO resources to perform N random access signal repetition transmissions.

The N random access signal repetition transmissions are to perform random access signal transmission on N RO resources respectively. For example, Msg1 carrying a preamble corresponding to Msg1 repetition transmission may be transmitted on N first RO resources (RO resources for 4-step RACH) separately.

It should be understood that if the network-side device configures only the first RO resource set for the terminal, the N random access signal repetition transmissions performed by the terminal are all on the first RO resources. If the network-side device configures only the second RO resource set for the terminal, the N random access signal repetition transmissions performed by the terminal are all on the second RO resource. If the network-side device configures, for the terminal, a first RO resource set and a second RO resource set, N random access signal repetition transmissions performed by the terminal may be N1 times on the first RO resources and N2 times on the second RO resources, where N1+N2=N, where N1 and N2 are integers greater than or equal to 0.

According to the technical solution of the above embodiment, in the random access resource configuration method provided in this embodiment of this application, the first configuration information is received from the network-side device, where the first configuration information is used for configuring a first RO resource set and/or a second RO resource set for random access signal repetition transmission; the first RO resource set may include a RO resource for 4-step RACH, a RO resource for 2-step RACH, and a RO resource for 4-step RACH for Msg3 repetition transmission; and the second RO resource set includes dedicated RO resources. Then, the association relationship of RO resources in the first RO resource set and/or the second RO resource set is determined. Then, N RO resources are determined based on the association relationship of the RO resources in the first RO resource set and/or the second RO resource set to perform N random access signal repetition transmissions, to support random access signal repetition transmission for a larger repetition count, complete random access signal repetition transmission in a shorter time, and obtain better diversity gains. In addition, with combination of different RO resources, the system can efficiently utilize RO resources.

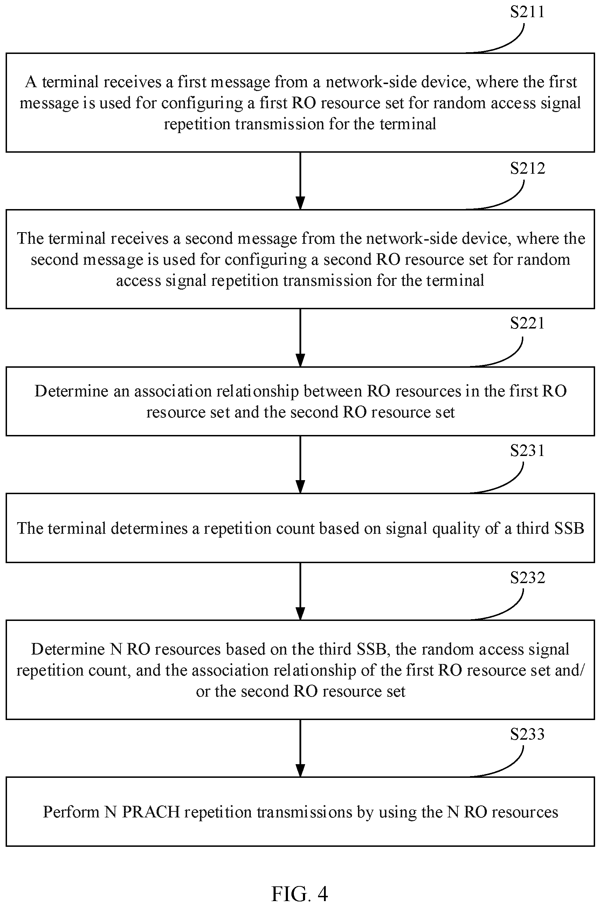

Based on the above embodiment, further, the network-side device configuring the first RO resource set and the second RO resource set for the terminal is used as an example for description, and as shown in FIG. 4, step S210 includes:

S211: The terminal receives a first message from the network-side device, where the first message is used for configuring the first RO resource set for random access signal repetition transmission for the terminal.

In an implementation, the first message may be carried in a radio resource control (Radio Resource Control, RRC) message, such as a system information block (System Information Block, SIB)1 and a configuration message RACHconfigcommon of a random reception channel.

In an implementation, the first message includes at least one of the following:

a first preamble (preamble) resource set corresponding to first RO resources in the first RO resource set, where the first preamble resource set includes first preamble resources for random access signal repetition transmission;
a repetition count M1 corresponding to the first RO resource; and
first identification information corresponding to the first RO resource.

It should be understood that the first RO resource in the first RO resource set may be at least one of the RO resource for 4-step RACH, the RO resource for 2-step RACH, or the RO resource for 4-step RACH for Msg3 repetition transmission. The first RO resource set may be part or all RO resources of any one type of the foregoing RO resources, that is, the first RO resource set may include at least one of all or part of the RO resources for 4-step RACH, all or part of the RO resources for 2-step RACH, or all or part of the RO resources for 4-step RACH for Msg3 repetition transmission.

It should be understood that the first preamble resource set configured for the first RO resources includes preamble resources for random access signal repetition transmission in preamble resources corresponding to RO resources. For example, if the first RO resource is an RO resource for 4-step RACH, the first preamble resource set for the first RO resources includes preamble resources that may be used for random access signal repetition transmission in all preamble resources corresponding to the RO resources for 4-step RACH.

In an implementation, different repetition counts correspond to first preamble resource sets that do not overlap with each other.

It should be understood that a repetition count M1 corresponding to the first RO resource is used to indicate that the first RO resource may be used for M1 repetition transmissions of a random access signal, and M1 may be set according to actual requirements, for example, 2 times or 4 times. For simplicity, two random access signal repetition transmissions and four random access signal repetition transmissions are used as examples in the following embodiments.

It should be understood that each first RO resource may only correspond to one repetition count, or may correspond to multiple repetition counts.

It should be understood that the first identification information corresponding to the first RO resource may be first identification information configured for each first RO resource, or may be merely one unified identification information configured for the first RO resource set, and the unified identification information includes first identification information corresponding to a first RO resource determined based on a number of the first RO resource in the first RO resource set. For example, if the identification information configured in the first RO resource set is mask (Mask) information, different subsets of RO resources are indicated by different masks. For example, Mask0 is defined as even-numbered first RO resources, that is, the first identification information corresponding to even-numbered first RO resources, and Mask1 is defined as odd-numbered first RO resources, that is, the first identification information corresponding to odd-numbered first RO resources.

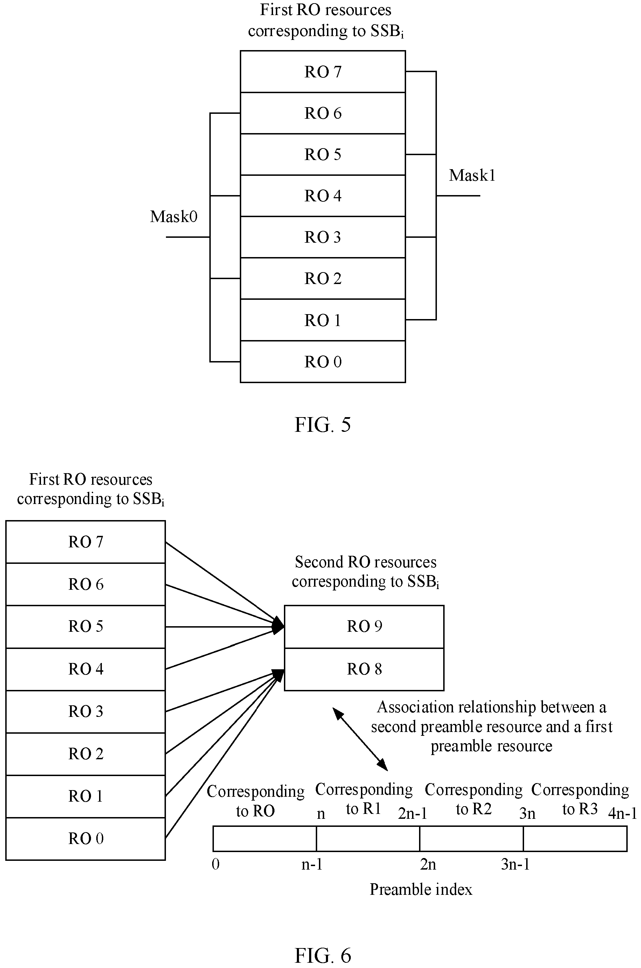

In an implementation, the first identification information may be used to indicate a repetition count corresponding to the first RO resource. For example, as shown in FIG. 5, the first RO resource set includes eight first RO resources RO0, RO1, RO2, RO3, RO4, RO5, RO6, and RO7 corresponding to SSBi. According to the masks configured by the network-side device, Mask0 indicates even-numbered first RO resources RO0, RO2, RO4 and RO6, which are used for two random access signal repetition transmissions, and Mask1 indicates odd-numbered first RO resources RO1, RO3, RO5 and RO7, which are used for four repetition transmissions of a random access signal.

In an implementation, the first preamble resource set corresponding to the first RO resources is determined based on at least one of the following:

    the number of first preamble resources in the first preamble resource set;
    a starting index (preamble index) of first preamble resources in the first preamble resource set; and
    the total number of first preamble resources corresponding to the first RO resource set.

In an implementation, a first preamble resource set corresponding to the repetition count may be determined based on the repetition count corresponding to the first RO resource configured in the first message, the number of first preamble resources in the first preamble resource set corresponding to the first RO resources, the starting index of the first preamble resources in the first preamble resource set, and the first identification information. The starting index of the first preamble resources may be defaulted except that it needs to be configured in the 1st first preamble resource set, and the first identification information may alternatively be defaulted.

In another implementation, it may be determined based on the repetition count corresponding to the first RO resource configured in the first message, the number of first preamble resources in the first preamble resource set corresponding to the first RO resources, or the starting index of the first preamble resources in the first preamble resource set. The starting index of the first preamble resources may be defaulted except that it needs to be configured in the 1st first preamble resource set, a starting index of the 2nd first preamble resource set is a next index to the ending index of the 1st first preamble resource set, and so on.

In another implementation, if the total number of first preamble resources corresponding to the first RO resource set is configured in the first message, the number of first preamble resources corresponding to the last first preamble resource set may be defaulted, and is determined implicitly based on the total number of first preamble resources and the number of first preamble resources in other first preamble resource sets.

It should be understood that the first message may also include time domain information of first RO resources in the first RO resource set, frequency domain information of the first RO resource, and information about an association between the first RO resources and SSBs.

S212: The terminal receives a second message from the network-side device, where the second message is used for configuring the second RO resource set for random access signal repetition transmission for the terminal.

In an implementation, the second message may be carried by an RRC message, such as SIB 1 or RACHconfigcommon.

In an implementation, the second message includes at least one of the following:

    time domain information of second RO resources in the second RO resource set;
    frequency domain information of the second RO resources;
    information about an association between the second RO resources and SSBs; and
    a second preamble resource set corresponding to the second RO resources, where the second preamble resource set includes second preamble resources for random access signal repetition transmission.

In an implementation, the frequency domain information of the second RO resource includes at least one of the following:

    a frequency domain starting position; and
    a frequency domain multiplexing quantity.

In an implementation, if the second message does not include the frequency domain information of the second RO resources, and the second message does not explicitly configure the frequency domain information for the second RO resources, the frequency domain information of the first RO resources is reused as the frequency domain information of the second RO resources, for example, a frequency domain starting position and a frequency domain multiplexing quantity of the RO resources for 4-step RACH are reused. A specific multiplexing rule is predefined by the protocol or indicated in an RRC message.

In an implementation, the information about the association between the second RO resources and the SSBs includes:

a parameter of an association relationship from the SSB to the second RO resource (ssb-perRACH-Occasion); and
an SSB set corresponding to the second RO resource.

It should be understood that the associated relationship parameter is a configuration parameter for indicating that one SSB is associated with a plurality of second RO resources. In an implementation, in the case that the second message does not include the parameter of the association relationship from the SSB to the second RO resource, the parameter of the association relationship from the SSB to the first RO resource is reused as the parameter of the association relationship from the SSB to the second RO resource, for example, a configuration parameter for association from the SSB for the RO resource for 4-step RACH to the RO resource is reused. In an implementation, a value of the parameter of the association relationship from the SSB to the second RO resource may be redefined, and only an association from one SSB to the second RO resource is configured, for example, a candidate value set is configured, including 1, 1/2, 1/4, 1/8, 1/16, and so on.

In an implementation, an SSB set corresponding to the second RO resources may be a subset of an SSB set associated with RO resources for transmission of a random access signal, and SSB validity information corresponding to each second RO resource may be used to indicate that one SSB subset in the SSB set associated with RO resources for transmission of a random access signal corresponds to the second RO resource. For a division manner of the SSB subset, the SSB set associated with the first RO resources being divided into a plurality of SSB subsets may be indicated by indication information or array enumeration, or be predefined by a protocol. For example, one cell transmits R SSBs: SSB0 to SSBR-1, and two second RO resources are configured for random access signal repetition transmission: dedicated RO resource 1 and dedicated RO resource 2. Dedicated RO resource 1 is used for random access signal repetition transmission of SSB subset 1{SSB0 to SSBR/2}, and dedicated RO resource 2 is used for random access signal repetition transmission of SSB subset 2{SSBR/2+1 to SSBR-1}. The dedicated RO resource 1 uses the SSB subset 1 to perform an SSB-to-second RO resource association operation; the dedicated RO resource 2 uses the SSB subset 2 to perform an SSB-to-second RO association operation.

In an implementation, the second message may further include a repetition count corresponding to the second RO resource. For example, the configured second RO resource set includes two second RO resources for repetition transmission, dedicated RO resource 1, and dedicated RO resource 2. The dedicated RO resource 1 is used for 2 repetition transmissions and the dedicated RO resource 2 is used for 4 repetition transmissions.

In an implementation, the second message may further include second identification information corresponding to the second RO resource.

In an implementation, the second identification information is used to indicate at least one of the following:

a repetition count corresponding to the second RO resource; and
an SSB or an SSB set associated with the second RO resource.

In an implementation, in a case that the network-side device configures the first RO resource set and the second RO resource set for the terminal, step S220 includes:

S221: Determine an association relationship between RO resources in the first RO resource set and the second RO resource set.

In an implementation, the step S221 includes: determining X first RO resources in the first RO resource set and Y second RO resources in the second RO resource set according to a first condition; where X and Y are positive integers.

The first condition may include at least one of the following:

the first RO resource corresponds to a first SSB, and the second RO resource corresponds to a second SSB; and
the first RO resource and the second RO resource correspond to a same repetition count.

In an implementation, the first SSB and the second SSB may be a same SSB, and if the random access signal repetition transmission is applied to a single SSB, it is necessary to determine an association relationship between the first RO resource and the second RO resource corresponding to the single SSB.

In another implementation, the first SSB and the second SSB may be a same group of SSBs, and if the random access signal repetition transmission may be applied to one SSB subset, an association relationship between the first RO resource and the second RO resource corresponding to the SSB subset needs to be determined.

In another implementation, the first SSB and the second SSB may alternatively be the same or different. The random access signal repetition transmission on the first RO resource is associated with a first SSB, and the random access signal repetition transmission on the second RO resource is associated with a second SSB, so it is necessary to determine an association relationship between the first RO resource corresponding to the first SSB and the second RO resource corresponding to the second SSB.

For simplicity, in the following embodiments, the first SSB and the second SSB being a same SSB is used as an example for description.

After the X first RO resources and Y second RO resources are determined, an association relationship between the X first RO resources and the Y second RO resource is determined. Specifically, the X first RO resources are first RO resources that are in one association cycle (association cycle) between the first RO resources in the first RO resource set and SSBs and that are associated with the first SSB. The X second RO resources are second RO resources that are in one association cycle (association cycle) between the second RO resources in the second RO resource set and SSBs and that are associated with the second SSB; or the X second RO resources are second RO resources that are in one association cycle (association cycle) between the second RO resources in the second RO resource set and SSBs and that are in one RO time resource and associated with the second SSB. Further optionally, X first RO resources for N random access signal repetition transmissions and Y second RO resources for N random access signal repetition transmissions are determined, that is, X first RO resources are selected from the first RO resource set supporting N random access signal repetition transmissions, and Y second RO resources are selected from the second RO resource set supporting N random access signal repetition transmissions.

Determining the association relationship may be implemented in a plurality of manners. In an implementation, the association relationship between the X first RO resources and the Y second RO resources is determined in at least one of the following manners:

being determined according to a predefined mapping criterion; and
being determined based on first mapping information, where the first mapping information is carried in the first configuration information.

In an implementation, the predefined mapping criterion may be related to the correspondence between a frequency domain multiplexing quantity of the first RO resource and a frequency domain multiplexing quantity of the second RO resource.

The frequency domain multiplexing quantity of the second RO resource may be smaller than the frequency domain multiplexing quantity of the first RO resource. A plurality of first RO resources need to be associated with one second RO resource. Considering that a proportion of terminals that need to perform random access signal repetition transmission is small in the total number of terminals in the cell, frequency resources required by the second RO resources are relatively small on the premise that a collision probability is approximately the same, thus improving the utilization efficiency of the second RO resources.

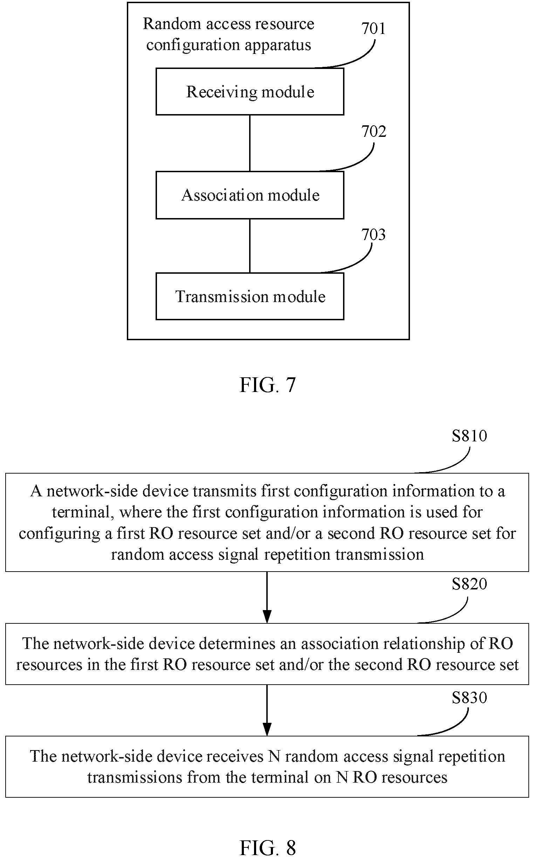

In an implementation, X first RO resources may be associated with Y second RO resources according to the principle of uniform mapping, and each second RO resource is associated with $\lfloor X/Y \rfloor$ or $\lceil X/Y \rceil$ first RO resources, or each first RO resource is associated with $\lfloor Y/X \rfloor$ or $\lceil Y/X \rceil$ second RO resources. $\lfloor \cdot \rfloor$ is a rounded-down symbol and $\lceil \cdot \rceil$ is a rounded-up symbol. The specific mapping manner may be to divide X first RO resources into Y groups according to a grouping manner, which are respectively associated with Y second RO resources, or are circularly mapped to Y second RO resources in the order of RO indexes in a circular mapping way. As shown in FIG. 6, 8 first RO resources corresponding to SSBi, namely RO0 to RO7, and two second RO resources corresponding to SSBi, namely RO8 and RO9, are determined. In this case, RO0 to RO3 are associated with RO8 and RO4 to RO7 are associated with RO9 according to the principle of uniform distribution.

In an implementation, the step S221 further includes:

determining an association relationship between a first preamble resource set corresponding to first RO resources in the first RO resource set and a second preamble resource set corresponding to second RO resources in the second RO resource set; where the first preamble resource set includes preamble resources used for random access signal repetition transmission on the first RO resource; and the second preamble resource set includes preamble resources used for random access signal repetition transmission on the second RO resource.

Determining the association relationship between the first preamble resource set and the second preamble resource set may be implemented in a plurality of manners, and this embodiment of this application provides only one specific implementation, which is determined in the following manner:

sequentially associating, based on a second numbering sequence of the second preamble resources and a first numbering sequence of the first preamble resources, the second preamble resources with the first preamble resources, starting from a target second preamble resource; where

the second numbering sequence is determined based on indexes of the second preamble resources in the second preamble resource set, and the first numbering sequence is determined based on a value of RO index of the associated first RO resource and values of preamble indexes of the first preamble resources in the first preamble resource set.

Mapping to the second preamble resources in the second preamble resource set corresponding to the second RO resources is performed in an ascending order of RO indexes of the first RO resources and in an ascending order of preamble indexes of the first preamble resources in the corresponding first preamble resource set. As shown in FIG. 6, if a first preamble resource set corresponding to each first RO resource includes n first preamble resources, the first numbering sequence, namely indexes 0 to 4n-1, obtained by sorting the first preamble resources in the first preamble resource set corresponding to RO0 to RO3 may be associated with the second preamble resources in the second preamble resource set corresponding to RO8.

It should be understood that the target second preamble resource is the 1st second preamble resource in the second preamble resource set, and is by default a second preamble resource numbered 0.

In an implementation, the association relationship between the X first RO resources and the Y second RO resources may alternatively be explicitly indicated by first mapping information carried in the first configuration information. For example, the first mapping information may be the first identification information corresponding to the first RO resource and the second identification information corresponding to the second RO resource; in this case, the first RO resource and the second RO resource corresponding to the first identification information and the second identification information respectively may be associated based on the first identification information and the second identification information.

In an implementation, the first mapping information is used to indicate at least one of the following:

association information of the first SSB and the second SSB, which may be, for example, a same SSB, a same SSB subset, or different SSB combinations;
an association relationship between the X first RO resources and the Y second RO resources; and
the target second preamble resource.

In another implementation, the predefined mapping criterion may be related to the correspondence between time domain positions of the first RO resources being amplified or extended in time domain and time domain positions of the second RO resources. That is, it is determined that time domain occupied resources of the second RO resources are S times those of the first RO resources. A specific configuration manner may be additionally configuring a slot offset or a scaling factor of RO resource period based on a time domain resource configuration parameter of the first RO resource to obtain a second RO resource with a rate of S times.

In an implementation, the first RO resource and the second RO resource are in a 1-to-S association relationship, and S times the second RO resources are included in the configuration period of the first RO resource.

In an implementation, the first RO resource is associated with consecutive S second RO resources in time domain. An SSB associated with the consecutive S second RO resources in time domain is consistent with that of the first RO resources.

An association pattern from the SSB of the first RO resource to the second RO resource is repeated S times on the second RO resources. The terminal selects RO resources with same positions as the first RO resources in the association pattern of the second RO resource as S second RO resources associated with the first RO resources.

The second preamble set corresponding to the second RO resources corresponds to the first preamble set for random access signal repetition transmission for the first RO resources, with a same preamble index.

It should be understood that in the process of associating the second RO resources with the first RO resources, second configuration mapping information may be added, where the second configuration mapping information may be related to time domain and is used to indicate that one time domain RO subset in the first RO resources is associated with the second RO resources.

It should be understood that determining the association relationship between RO resources in the first RO resource set may be implemented in a plurality of manners, and may be performed according to a predefined mapping criterion or based on association identification information. X RO resources in a first association cycle and X RO resources in a second association cycle are determined, where the first association cycle and the second association cycle are association cycles in the first RO resource set at different times. The X RO resources in the first association cycle and the X RO resources in the second association cycle are associated with a same SSB. According to the predefined mapping criterion, a mapping relationship is established between RO resources with a same number; or identification information such as RO index offset is associated to determine a mapping relationship between the X RO resources in the first association cycle and the X RO resources in the second association cycle. A mapping relationship is established between the X RO resources in the first association cycle and the X RO resources in the second association cycle that have a same preamble.

It should be understood that determining the association relationship between RO resources in the first RO resource set may be implemented in a plurality of manners, and may be performed according to a predefined mapping criterion or based on association identification information. Y RO resources in a third association cycle and Y RO resources in a fourth association cycle are determined, where the third association cycle and the fourth association cycle are association cycles in the second RO resource set at different times; or Y RO resources in a first RO time resource and Y RO resources in a second RO time resource are determined, where the first RO time resource and the second RO time resource are RO time resources at different times in the second RO resource set. The Y RO resources in the third association cycle and the Y RO resources in the fourth association cycle are associated with a same SSB. According to the predefined mapping criterion, a mapping relationship is established between RO resources with a same number; or identification information such as RO index offset is associated to determine a mapping relationship between the Y RO resources in the third association cycle and the Y RO resources in the fourth association cycle. A mapping relationship is established between the Y RO resources in the third association cycle and the Y RO resources in the fourth association cycle that have a same preamble.

In an implementation, the step S220 may further include:
determining the association relationship between RO resources in the first RO resource set specifically based on at least one of the following:

first identification information corresponding to the RO resource;
the number of multiplexing times corresponding to the RO resource; and
an SSB corresponding to the RO resource.

For example, first RO resources corresponding to a same SSB and having the same number of multiplexing times may be associated.

In an implementation, the step S220 may further include:
determining the association relationship between RO resources in the second RO resource set specifically based on at least one of the following:

second identification information corresponding to the RO resource;
the number of multiplexing times corresponding to the RO resource; and
an SSB corresponding to the RO resource.

For example, second RO resources corresponding to a same SSB and having the same number of multiplexing times may be associated.

In an implementation, before step S230, the method further includes:

in a case that a first condition is met, determining, by the terminal, to perform random access signal repetition transmission; where
the first condition includes at least one of the following:

signal quality of the third SSB is lower than a first threshold T0, and the third SSB is an SSB used for random access signal repetition transmission; and
the number of failures in executing a random access procedure reaches a second threshold.

It should be understood that the third SSB may be an SSB selected by the terminal based on signal quality of SSBs.

The terminal may monitor the signal quality of the third SSB, for example, downlink loss reference or RSRP, and when the signal quality of the third SSB is lower than the first threshold T0, the terminal determines to perform random access signal repetition transmission. Alternatively, after the terminal performs random access signal transmission and fails for M times, the terminal determines to perform random access signal repetition transmission, where no Msg2 message being received after random access signal transmission may be considered as a failure of random access signal transmission.

In an implementation, the step S230 includes:
S231: The terminal determines a repetition count based on signal quality of the third SSB.

In an implementation, the terminal may be configured with A-1 first thresholds T1 to obtain A threshold ranges, and threshold ranges for SSB signal quality separately correspond to A types repetition counts. The signal quality of each SSB, such as RSRP, is compared with A-1 first thresholds T1 in turn. An SSB exceeding the first threshold T1 is selected as the third SSB or an SSB with the best signal quality is selected as the third SSB. A repetition count corresponding to a threshold range exceeding the first threshold T1 is uses as a repetition count of the current random access signal repetition transmission. If a plurality of SSBs meet the above condition, one SSB may be randomly selected as the third SSB. If signal quality of no SSB exceeds any first threshold T1, the maximum repetition count configured by the network is used for random access signal repetition transmission. Alternatively, one SSB combination is selected from several SSB combinations configured by the network as the third SSB, and signal quality of at least one SSB in the SSB combination exceeds the first threshold T1.

S232: Determine N RO resources based on the third SSB, the random access signal repetition count, and the association relationship of the first RO resource set and/or the second RO resource set.

A first RO resource and/or a second RO resource for the current random access signal repetition transmission and a corresponding first preamble resource set and/or second preamble resource set are determined from the first RO resource set and/or the second RO resource set.

S233: Perform N random access signal repetition transmissions by using the N RO resources.

In an implementation, the random access signal repetition transmission may be completed in one or more time units, where the time unit may be an association cycle (association cycle) or association period (association period) or association pattern period (association pattern period) from 4-step RACH related SSB to RO. For example, one PRACH association period includes a mapping cycles (association cycle) from SSB to the first RO resource and b mapping cycles from SSB to the second RO resource; in this case, one PRACH association period can support repetition transmission of a+b random access signals or less. If the number of random access signal repetition transmissions is c, the consecutive PRACH association periods occupied by the random access signal repetition transmission is $c/(a + b)$. The 1st association period in a plurality of consecutive PRACH association periods is calculated from a reference association period defined by the protocol, for example, division of the consecutive PRACH association periods for random access signal repetition transmission is based on a PRACH association period starting from radio frame 0.

The terminal uses the 1st RO resource meeting the first condition in the time unit as an initial RO to start random access signal repetition transmission. The first condition may be the 1st first RO resource associated with the third SSB in the time unit and supporting N random access signal repetition transmissions; or the 1st first RO resource or second RO resource associated with the third SSB in the time unit and supporting N random access signal repetition transmissions.

It can be understood that a preamble used for N random access signal repetition transmissions is determined based on the association relationship between the first RO resource and the second RO resource.

In an implementation, a time span for random access signal repetition transmission need to not exceed a preset upper time limit, where the upper time limit may be a PRACH association cycle, a PRACH association period, or a PRACH association pattern period (association pattern period). The system may determine a supported maximum number of random access signal repetition transmissions based on the number of first RO resources and second RO resources in a time range corresponding to the upper time limit.

After transmitting the random access signal repetition transmission, the terminal needs to start a RAR monitoring window to monitor a RAR transmitted by the network-side device. The RAR monitoring window may be started in many manners, and this embodiment of this application provides only several specific manners for description.

In an implementation, the terminal may start the RAR monitoring window after each random access signal transmission, and a length of the monitoring window may be configured by an RRC message. If no RAR is received in the monitoring window and the number of random access signal repetition transmissions has not reached the repetition count, the random access signal is transmitted again on a next determined first RO resource or second RO resource. If the number of random access signal repetition transmissions has reached the repetition count, it may be considered that the random access signal repetition transmission has failed this time, a failure counter for random access signal transmission is incremented by 1, and automatic backoff (backoff) is performed.

In another implementation, the terminal may start the RAR monitoring window after completing N random access signal repetition transmissions. If no RAR is received in the monitoring window, the terminal directly considers that the random access signal repetition transmission has failed, the failure counter for random access signal transmission is incremented by 1, and automatic backoff (backoff) is performed.

According to the technical solution in the above embodiment, in this embodiment of this application, the terminal determines X first RO resources in the first RO resource set and Y second RO resources in the second RO resource set according to the first condition in a case that the network-side device configures the first RO resource set and the second RO resource set for the terminal, and then determines the association relationship between the X first RO resources and the Y second RO resources, to support random access signal repetition transmission for a larger repetition count and obtain better diversity gains. In addition, with combination of different RO resources, the system can efficiently utilize RO resources.

Based on the above embodiment, further, as shown in FIG. 6, the second RO resource set is located in a separately configured bandwidth part (BandWidth Part, BWP).

It should be understood that the separately configured BWP is uplink BWP (Uplink BWP, UL BWP), which is only used to configure the second RO resource set, that is, the network-side device only configures the second RO resource set for the terminal, so there is no association relationship to determine the RO resources in the first RO resource set and the second RO resource set.

The terminal monitors the channel quality of the third SSB to determine whether to perform random access signal repetition transmission, that is, when the channel quality of the third SSB is lower than the first threshold T0, the terminal performs random access signal repetition transmission. If the terminal performs random access signal repetition transmission, the terminal is switched to the separately configured UL BWP, otherwise, it is on the conventional UL BWP for random access signal transmission.

The terminal determines the association relationship between RO resources in the second RO resource set specifically based on at least one of the following:

> second identification information corresponding to the RO resource;
> the number of multiplexing times corresponding to the RO resource; and
> an SSB corresponding to the RO resource.

In an implementation, the network-side device configures the frequency domain multiplexing quantity F of the RO resources and the association relationship parameter L from SSB to the second RO resource, and L = k * F. This makes consecutive k second RO resources in time domain be associated with a same SSB. The terminal may use the second RO resource to implement random access signal repetition transmission for no more than k times.

According to the technical solution in the above embodiment, in this embodiment of this application, the network-side device configures for the terminal the second RO resource set located in the separately configured BWP, for random access signal repetition transmission, to support random access signal repetition transmission for a larger repetition count and obtain better diversity gains.

For the random access resource configuration method provided in the embodiments of this application, the execution body may be a random access resource configuration apparatus. In the embodiments of this application, the random access resource configuration method being performed by the random access resource configuration apparatus is used as an example to describe the random access resource configuration apparatus provided in the embodiments of this application.

As shown in FIG. 7, the random access resource configuration apparatus includes a receiving module 701, an association module 702, and a transmission module 703.

The receiving module 701 is configured to receive first configuration information from a network-side device, where the first configuration information is used for configuring a first RO resource set and/or a second RO resource set for random access signal repetition transmission. The association module 702 is configured to determine an association relationship of RO resources in the first RO resource set and/or the second RO resource set; and the transmission module 703 is configured to determine N RO resources based on the association relationship of the RO resources in the first RO resource set and/or the second RO resource set to perform N random access signal repetition transmissions.

The first RO resource set includes at least one of the following RO resources:

> a RO resource for 4-step RACH;
> a RO resource for 2-step RACH; and

> a RO resource for 4-step RACH for Msg3 repetition transmission; and
> the second RO resource set includes dedicated RO resources for random access signal repetition transmission; where
> N is a positive integer.

Further, the association module 702 is configured to determine at least one of the following association relationships:

> an association relationship between RO resources in the first RO resource set;
> an association relationship between RO resources in the second RO resource set; and
> an association relationship between RO resources in the first RO resource set and the second RO resource set.

According to the technical solution of the above embodiment, in the random access resource configuration method provided in this embodiment of this application, the first configuration information is received from the network-side device, where the first configuration information is used for configuring a first RO resource set and/or a second RO resource set for random access signal repetition transmission; the first RO resource set may include a RO resource for 4-step RACH, a RO resource for 2-step RACH, and a RO resource for 4-step RACH for Msg3 repetition transmission; and the second RO resource set includes dedicated RO resources. Then, the association relationship of RO resources in the first RO resource set and/or the second RO resource set is determined. Then, N RO resources are determined based on the association relationship of the RO resources in the first RO resource set and/or the second RO resource set to perform N random access signal repetition transmissions, to support random access signal repetition transmission for a larger repetition count and obtain better diversity gains. In addition, with combination of different RO resources, the system can efficiently utilize RO resources.

Based on the foregoing embodiment, further, the association module 702 is configured to:

> determine X first RO resources in the first RO resource set and Y second RO resources in the second RO resource set according to a first condition; and
> determine an association relationship between the X first RO resources and the Y second RO resources; where
> the first condition includes at least one of the following:

>> the first RO resource corresponds to a first SSB, and the second RO resource corresponds to a second SSB; and
>> the first RO resource and the second RO resource correspond to a same repetition count; where

X and Y are positive integers.

Further, the association relationship between the X first RO resources and the Y second RO resources is determined in at least one of the following manners:

being determined according to a predefined mapping criterion; and
being determined based on first mapping information, where the first mapping information is carried in the first configuration information.

Further, the predefined mapping criterion is related to at least one of the following:

a correspondence between a frequency domain multiplexing quantity of the first RO resources and a frequency domain multiplexing quantity of the second RO resources; and
a correspondence between time domain positions of the first RO resources being amplified or extended in time domain and time domain positions of the second RO resources.

Further, the association module 702 is further configured to:

determine an association relationship between a first preamble resource set corresponding to first RO resources in the first RO resource set and a second preamble resource set corresponding to second RO resources in the second RO resource set; where the first preamble resource set includes preamble resources used for random access signal repetition transmission on the first RO resource; and the second preamble resource set includes preamble resources used for random access signal repetition transmission on the second RO resource.

Further, each second RO resource is associated with $\lfloor X/Y \rfloor$ or $\lceil X/Y \rceil$ first RO resources, or each first RO resource is associated with $\lfloor Y/X \rfloor$ or $\lceil Y/X \rceil$ second RO resources.

Further, the association module 702 is configured to:

sequentially associate, based on a second numbering sequence of the second preamble resources and a first numbering sequence of the first preamble resources, the second preamble resources with the first preamble resources, starting from a target second preamble resource; where
the second numbering sequence is determined based on indexes of the second preamble resources in the second preamble resource set, and the first numbering sequence is determined based on a value of RO index of the associated first RO resource and values of preamble indexes of the first preamble resources in the first preamble resource set.

Further, the target second preamble resource is the 1st second preamble resource in the second preamble resource set.

Further, the first mapping information is used to indicate at least one of the following:

an association relationship between the first SSB and the second SSB;
an association relationship between the X first RO resources and the Y second RO resources; and
the target second preamble resource.

Further, the association relationship between RO resources in the first RO resource set is determined based on at least one of the following:

first identification information corresponding to the RO resource;
the number of multiplexing times corresponding to the RO resource; and
an SSB corresponding to the RO resource.

Further, the association relationship between RO resources in the second RO resource set is determined based on at least one of the following:

second identification information corresponding to the RO resource;
the number of multiplexing times corresponding to the RO resource; and
an SSB corresponding to the RO resource.

Further, the receiving module 701 is configured to perform at least one of the following:

receiving a first message from the network-side device, where the first message is used for configuring the first RO resource set for random access signal repetition transmission for the terminal; and
receiving a second message from the network-side device, where the second message is used for configuring the second RO resource set for random access signal repetition transmission for the terminal.

Further, the first message includes at least one of the following:

a first preamble resource set corresponding to first RO resources in the first RO resource set, where the first preamble resource set includes first preamble resources for random access signal repetition transmission;

a repetition count corresponding to the first RO resource; and

first identification information corresponding to the first RO resource.

Further, the first identification information is used to indicate the repetition count corresponding to the first RO resource.

Further, different repetition counts correspond to first preamble resource sets that do not overlap with each other.

Further, the first preamble resource set corresponding to the first RO resources is determined based on at least one of the following:

the number of first preamble resources in the first preamble resource set;

a starting index of first preamble resources in the first preamble resource set; and

the total number of first preamble resources corresponding to the first RO resource set.

Further, the second message includes at least one of the following:

time domain information of second RO resources in the second RO resource set;

frequency domain information of the second RO resources;

information about an association between the second RO resources and SSBs;

a second preamble resource set corresponding to the second RO resources, where the second preamble resource set includes second preamble resources for random access signal repetition transmission;

a repetition count corresponding to the second RO resource; and

second identification information corresponding to the second RO resource.

Further, the frequency domain information of the second RO resource includes at least one of the following:

a frequency domain starting position; and

a frequency domain multiplexing quantity.

Further, in a case that the second message does not include the frequency domain information of the second RO resources, the frequency domain information of the first RO resources is reused as the frequency domain information of the second RO resources.

Further, the information about the association between the second RO resources and the SSBs includes:

a parameter of an association relationship from the SSB to the second RO resource; and

an SSB set corresponding to the second RO resource.

Further, in a case that the second message does not include the parameter of the association relationship from the SSB to the second RO resource, a parameter of an association relationship from the SSB to the first RO resource is reused as the parameter of the association relationship from the SSB to the second RO resource.

Further, the second identification information is used to indicate at least one of the following:

a repetition count corresponding to the second RO resource; and

an SSB or an SSB set associated with the second RO resource.

Further, the association module 702 is further configured to: in a case that a first condition is met, determine to perform random access signal repetition transmission; where

the first condition includes at least one of the following:

signal quality of the third SSB is lower than a first threshold, and the third SSB is an SSB used for random access signal repetition transmission; and

the number of failures in executing a random access procedure reaches a second threshold.

Further, the transmission module 703 is configured to:

determine a repetition count based on signal quality of the third SSB;

determine N RO resources based on the third SSB, the repetition count, and the association relationship of the first RO resource set and/or the second RO resource set; and

perform N random access signal repetition transmissions by using the N RO resources.

According to the technical solution in the above embodiment, in this embodiment of this application, X first RO resources in the first RO resource set and Y second RO resources in the second RO resource set are determined according to the first condition in a case that the first RO resource set and the second RO resource set are configured. Then, the association relationship between the X first RO resources and the Y second RO resources is determined, to support random access signal repetition transmission for a larger repetition count and obtain better diversity gains. In addition, with combination of different RO resources, the system can efficiently utilize RO resources.

Based on the above embodiment, further, the second RO resource set is located in a separately configured BWP.

According to the technical solution in the above embodiment, in this embodiment of this application, the second RO resource set located in the separately configured BWP is configured for random access signal repetition transmission, to support random access signal repetition transmission for a larger repetition count and obtain better diversity gains.

The random access resource configuration apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The random access resource configuration apparatus provided in this embodiment of this application is capable of implementing the processes implemented in the method embodiments in FIG. 2 to FIG. 6, with the same technical effects achieved. To avoid repetition, details are not described herein again.

As shown in FIG. 8, an embodiment of this application further provides a random access resource configuration method, and the execution body of the method is a network-side device, in other words, the method can be executed by software or hardware installed in the network-side device. The method includes the following steps:

S810: The network-side device transmits first configuration information to a terminal, where the first configuration information is used for configuring a first RO resource set and/or a second RO resource set for random access signal repetition transmission.

S820: The network-side device determines an association relationship of RO resources in the first RO resource set and/or the second RO resource set.

S830: The network-side device receives N random access signal repetition transmissions from the terminal on N RO resources.

The N RO resources are determined based on an association relationship of the first RO resource set and/or the second RO resource set.

The first RO resource set includes at least one of the following RO resources:

a RO resource for 4-step RACH;
a RO resource for 2-step RACH; and
a RO resource for 4-step RACH for Msg3 repetition transmission.

The second RO resource set includes dedicated RO resources for random access signal repetition transmission.

N is a positive integer.

Further, the step S820 includes determining at least one of the following association relationships:

an association relationship between RO resources in the first RO resource set;
an association relationship between RO resources in the second RO resource set; and
an association relationship between RO resources in the first RO resource set and the second RO resource set.

Further, the step S820 includes determining at least one of the following association relationships:

an association relationship between RO resources in the first RO resource set;
an association relationship between RO resources in the second RO resource set; and
an association relationship between RO resources in the first RO resource set and the second RO resource set.

Steps S810 to S830 can implement the method embodiment shown in FIG. 2, with the same technical effects achieved, and the repeated parts are not repeated herein.

According to the technical solution of the above embodiment, in the random access resource configuration method provided in this embodiment of this application, the first configuration information is transmitted to the terminal, where the first configuration information is used for configuring a first RO resource set and/or a second RO resource set for random access signal repetition transmission; the first RO resource set may include a RO resource for 4-step RACH, a RO resource for 2-step RACH, and a RO resource for 4-step RACH for Msg3 repetition transmission; and the second RO resource set includes dedicated RO resources. Then, the association relationship of RO resources in the first RO resource set and/or the second RO resource set is determined. Then, N random access signal repetition transmissions are received from the terminal on N RO resources, to support random access signal repetition transmission for a larger repetition count and obtain better diversity gains. In addition, with combination of different RO resources, the system can efficiently utilize RO resources.

Based on the foregoing embodiment, further, the step S820 includes:

determining X first RO resources in the first RO resource set and Y second RO resources in the second RO resource set according to a first condition; and
determining an association relationship between the X first RO resources and the Y second RO resources; where

the first condition includes at least one of the following:

the first RO resource corresponds to a first SSB, and the second RO resource corresponds to a second SSB; and
the first RO resource and the second RO resource correspond to a same repetition count; where
X and Y are positive integers.

Further, the association relationship between the X first RO resources and the Y second RO resources is determined in at least one of the following manners:

being determined according to a predefined mapping criterion; and
being determined based on first mapping information, where the first mapping information is carried in the first configuration information.

Further, the predefined mapping criterion is related to at least one of the following:

a correspondence between a frequency domain multiplexing quantity of the first RO resources and a frequency domain multiplexing quantity of the second RO resources; and
a correspondence between time domain positions of the first RO resources being amplified or extended in time domain and time domain positions of the second RO resources.

Further, the step S820 further includes:

determining an association relationship between a first preamble resource set corresponding to first RO resources in the first RO resource set and a second preamble resource set corresponding to second RO resources in the second RO resource set; where the first preamble resource set includes preamble resources used for random access signal repetition transmission on the first RO resource; and the second preamble resource set includes preamble resources used for random access signal repetition transmission on the second RO resource.

Further, each second RO resource is associated with $\lfloor X/Y \rfloor$ or $\lceil X/Y \rceil$ first RO resources, or each first RO resource is associated with $\lfloor Y/X \rfloor$ or $\lceil Y/X \rceil$ second RO resources.

Further, the determining an association relationship between a first preamble resource set corresponding to first RO resources in the first RO resource set and a second preamble resource set corresponding to second RO resources in the second RO resource set is performed in the following manner:

sequentially associating, based on a second numbering sequence of the second preamble resources and a first numbering sequence of the first preamble resources, the second preamble resources with the first preamble resources, starting from a target second preamble resource; where
the second numbering sequence is determined based on indexes of the second preamble resources in the second preamble resource set, and the first numbering sequence is determined based on a value of RO index of the associated first RO resource and values of preamble indexes of the first preamble resources in the first preamble resource set.

Further, the target second preamble resource is the 1st second preamble resource in the second preamble resource set.

Further, the first mapping information is used to indicate at least one of the following:

an association relationship between the first SSB and the second SSB;
an association relationship between the X first RO resources and the Y second RO resources; and
the target second preamble resource.

Further, the association relationship between RO resources in the first RO resource set is determined based on at least one of the following:

first identification information corresponding to the RO resource;
the number of multiplexing times corresponding to the RO resource; and
an SSB corresponding to the RO resource.

Further, the association relationship between RO resources in the second RO resource set is determined based on at least one of the following:

second identification information corresponding to the RO resource;
the number of multiplexing times corresponding to the RO resource; and
an SSB corresponding to the RO resource.

Further, the step S810 includes at least one of the following:

transmitting, for the network-side device, a first message to the terminal, where the first message is used for configuring the first RO resource set for random access signal repetition transmission for the terminal; and
transmitting, for the network-side device, a second message to the terminal, where the second message is used for configuring the second RO resource set for random access signal repetition transmission for the terminal.

Further, the first message includes at least one of the following:

a first preamble resource set corresponding to first RO resources in the first RO resource set, where the first preamble resource set includes first preamble resources for random access signal repetition transmission;
a repetition count corresponding to the first RO resource; and
first identification information corresponding to the first RO resource.

Further, the first identification information is used to indicate the repetition count corresponding to the first RO resource.

Further, different repetition counts correspond to first preamble resource sets that do not overlap with each other.

Further, the first preamble resource set corresponding to the first RO resources is determined based on at least one of the following:

the number of first preamble resources in the first preamble resource set;
a starting index of first preamble resources in the first preamble resource set; and
the total number of first preamble resources corresponding to the first RO resource set.

Further, the second message includes at least one of the following:

time domain information of second RO resources in the second RO resource set;
frequency domain information of the second RO resources;
information about an association between the second RO resources and SSBs;
a second preamble resource set corresponding to the second RO resources, where the second preamble resource set includes second preamble resources for random access signal repetition transmission;
a repetition count corresponding to the second RO resource; and
second identification information corresponding to the second RO resource.

Further, the frequency domain information of the second RO resource includes at least one of the following:

a frequency domain starting position; and

a frequency domain multiplexing quantity.

Further, in a case that the second message does not include the frequency domain information of the second RO resources, the frequency domain information of the first RO resources is reused as the frequency domain information of the second RO resources.
Further, the information about the association between the second RO resources and the SSBs includes:

a parameter of an association relationship from the SSB to the second RO resource; and
an SSB set corresponding to the second RO resource.

Further, in a case that the second message does not include the parameter of the association relationship from the SSB to the second RO resource, a parameter of an association relationship from the SSB to the first RO resource is reused as the parameter of the association relationship from the SSB to the second RO resource.
Further, the second identification information is used to indicate at least one of the following:

a repetition count corresponding to the second RO resource; and
an SSB or an SSB set associated with the second RO resource.

This embodiment of this application can implement the method embodiment shown in FIG. 4, with the same technical effects achieved, and the repeated parts are not repeated herein.
According to the technical solution in the above embodiment, in this embodiment of this application, X first RO resources in the first RO resource set and Y second RO resources in the second RO resource set are determined according to the first condition in a case that the first RO resource set and the second RO resource set are configured. Then, the association relationship between the X first RO resources and the Y second RO resources is determined, to support random access signal repetition transmission for a larger repetition count and obtain better diversity gains. In addition, with combination of different RO resources, the system can efficiently utilize RO resources.
Based on the above embodiment, further, the second RO resource set is located in a separately configured BWP.
According to the technical solution in the above embodiment, in this embodiment of this application, the second RO resource set located in the separately configured BWP is configured for random access signal repetition transmission, to support random access signal repetition transmission for a larger repetition count and obtain better diversity gains.

According to the technical solution in the above embodiment, in this embodiment of this application, the network-side device configures for the terminal the second RO resource set located in the separately configured BWP, for random access signal repetition transmission, to support random access signal repetition transmission for a larger repetition count and obtain better diversity gains.

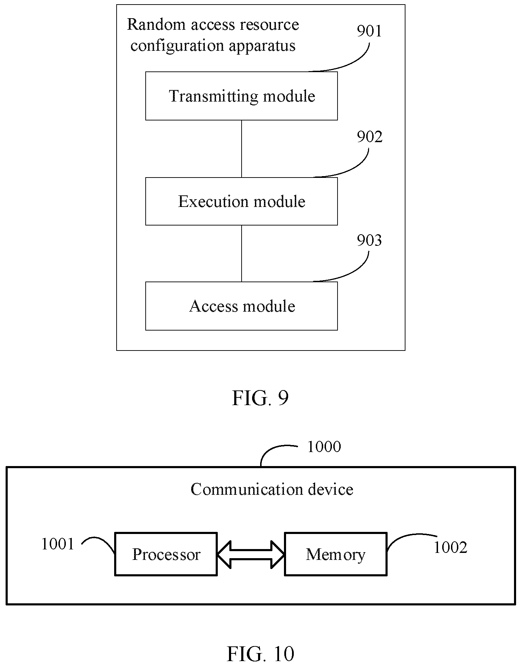

As shown in FIG. 9, the random access resource configuration apparatus includes a transmitting module 901, an execution module 902, and an access module 903.

The transmitting module 901 is configured to transmit first configuration information to a terminal, where the first configuration information is used for configuring a first RO resource set and/or a second RO resource set for random access signal repetition transmission. The execution module 902 is configured to determine an association relationship of RO resources in the first RO resource set and/or the second RO resource set. The access module 903 is configured to receive N random access signal repetition transmissions from the terminal on N RO resources.

The N RO resources are determined based on an association relationship of the first RO resource set and/or the second RO resource set.

The first RO resource set includes at least one of the following RO resources:

a RO resource for 4-step RACH;
a RO resource for 2-step RACH; and
a RO resource for 4-step RACH for Msg3 repetition transmission.

The second RO resource set includes dedicated RO resources for random access signal repetition transmission.

N is a positive integer.

Further, the execution module 902 is configured to determine at least one of the following association relationships:

an association relationship between RO resources in the first RO resource set;
an association relationship between RO resources in the second RO resource set; and
an association relationship between RO resources in the first RO resource set and the second RO resource set.

According to the technical solution of the above embodiment, in the random access resource configuration method provided in this embodiment of this application, the first configuration information is transmitted to the terminal, where the first configuration information is used for configuring a first RO resource set and/or a second RO resource set for random access signal repetition transmission; the first RO resource set may include a RO resource for 4-step RACH, a RO resource for 2-step RACH, and a RO resource for 4-step RACH for Msg3 repetition transmission; and the second RO resource set includes dedicated RO resources. Then, the association relationship of RO resources in the first RO resource set and/or the second RO resource set is determined. Then, N random access signal repetition transmissions are received from the terminal on N RO resources, to support random access signal repetition transmission for a larger repetition count and obtain better diversity gains. In addition, with combination of different RO resources, the system can efficiently utilize RO resources.

Based on the foregoing embodiment, further, the execution module 902 is configured to:

determine X first RO resources in the first RO resource set and Y second RO resources in the second RO resource set according to a first condition; and determine an association relationship between the X first RO resources and the Y second RO resources; where
the first condition includes at least one of the following:

the first RO resource corresponds to a first SSB, and the second RO resource corresponds to a second SSB; and
the first RO resource and the second RO resource correspond to a same repetition count; where
X and Y are positive integers.

Further, the association relationship between the X first RO resources and the Y second RO resources is determined in at least one of the following manners:

being determined according to a predefined mapping criterion; and
being determined based on first mapping information, where the first mapping information is carried in the first configuration information.

Further, the predefined mapping criterion is related to at least one of the following:

a correspondence between a frequency domain multiplexing quantity of the first RO resources and a frequency domain multiplexing quantity of the second RO resources; and
a correspondence between time domain positions of the first RO resources being amplified or extended in time domain and time domain positions of the second RO resources.

Further, the execution module 902 is further configured to:

determine an association relationship between a first preamble resource set corresponding to first RO resources in the first RO resource set and a second preamble resource set corresponding to second RO resources in the second RO resource set; where the first preamble resource set includes preamble resources used for random access signal repetition transmission on the first RO resource; and the second preamble resource set includes preamble resources used for random access signal repetition transmission on the second RO resource.

Further, each second RO resource is associated with $\lfloor X/Y \rfloor$ or $\lceil X/Y \rceil$ first RO resources, or each first RO resource is associated with $\lfloor Y/X \rfloor$ or $\lceil Y/X \rceil$ second RO resources.

Further, the execution module 902 is configured to:

sequentially associate, based on a second numbering sequence of the second preamble resources and a first numbering sequence of the first preamble resources, the second preamble resources with the first preamble resources, starting from a target second preamble resource; where the second numbering sequence is determined based on indexes of the second preamble resources in the second preamble resource set, and the first numbering sequence is determined based on a value of RO index of the associated first RO resource and values of preamble indexes of the first preamble resources in the first preamble resource set.

Further, the target second preamble resource is the 1st second preamble resource in the second preamble resource set.

Further, the first mapping information is used to indicate at least one of the following:

an association relationship between the first SSB and the second SSB; an association relationship between the X first RO resources and the Y second RO resources; and the target second preamble resource.

Further, the association relationship between RO resources in the first RO resource set is determined based on at least one of the following:

first identification information corresponding to the RO resource; the number of multiplexing times corresponding to the RO resource; and an SSB corresponding to the RO resource.

Further, the association relationship between RO resources in the second RO resource set is determined based on at least one of the following:

second identification information corresponding to the RO resource; the number of multiplexing times corresponding to the RO resource; and an SSB corresponding to the RO resource.

Further, the transmitting module 901 is configured to perform at least one of the following:

transmitting, for the network-side device, a first message to the terminal, where the first message is used for configuring the first RO resource set for random access signal repetition transmission for the terminal; and transmitting, for the network-side device, a second message to the terminal, where the second message is used for configuring the second RO resource set for random access signal repetition transmission for the terminal.

Further, the first message includes at least one of the following:

a first preamble resource set corresponding to first RO resources in the first RO resource set, where the first preamble resource set includes first preamble resources for random access signal repetition transmission; a repetition count corresponding to the first RO resource; and first identification information corresponding to the first RO resource.

Further, the first identification information is used to indicate the repetition count corresponding to the first RO resource.

Further, different repetition counts correspond to first preamble resource sets that do not overlap with each other.

Further, the first preamble resource set corresponding to the first RO resources is determined based on at least one of the following:

the number of first preamble resources in the first preamble resource set; a starting index of first preamble resources in the first preamble resource set; and the total number of first preamble resources corresponding to the first RO resource set.

Further, the second message includes at least one of the following:

time domain information of second RO resources in the second RO resource set;

frequency domain information of the second RO resources;

information about an association between the second RO resources and SSBs;

a second preamble resource set corresponding to the second RO resources, where the second preamble resource set includes second preamble resources for random access signal repetition transmission;

a repetition count corresponding to the second RO resource; and

second identification information corresponding to the second RO resource.

Further, the frequency domain information of the second RO resource includes at least one of the following:

a frequency domain starting position; and
a frequency domain multiplexing quantity.

Further, in a case that the second message does not include the frequency domain information of the second RO resources, the frequency domain information of the first RO resources is reused as the frequency domain information of the second RO resources.

Further, the information about the association between the second RO resources and the SSBs includes:

a parameter of an association relationship from the SSB to the second RO resource; and
an SSB set corresponding to the second RO resource.

Further, in a case that the second message does not include the parameter of the association relationship from the SSB to the second RO resource, a parameter of an association relationship from the SSB to the first RO resource is reused as the parameter of the association relationship from the SSB to the second RO resource.

Further, the second identification information is used to indicate at least one of the following:

a repetition count corresponding to the second RO resource; and
an SSB or an SSB set associated with the second RO resource.

According to the technical solution in the above embodiment, in this embodiment of this application, X first RO resources in the first RO resource set and Y second RO resources in the second RO resource set are determined according to the first condition in a case that the first RO resource set and the second RO resource set are configured. Then, the association relationship between the X first RO resources and the Y second RO resources is determined, to support random access signal repetition transmission for a larger repetition count and obtain better diversity gains. In addition, with combination of different RO resources, the system can efficiently utilize RO resources.

Based on the above embodiment, further, the second RO resource set is located in a separately configured BWP.

According to the technical solution in the above embodiment, in this embodiment of this application, the second RO resource set located in the separately configured BWP is configured for random access signal repetition transmission, to support random access signal repetition transmission for a larger repetition count and obtain better diversity gains.

The random access resource configuration apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The random access resource configuration apparatus provided in this embodiment of this application is capable of implementing the processes implemented in the method embodiments in FIG. 8, with the same technical effects achieved. To avoid repetition, details are not described herein again.

Optionally, as shown in FIG. 10, an embodiment of this application further provides a communication device 1000, including a processor 1001, a memory 1002, and a program or instructions stored in the memory 1002 and capable of running on the processor 1001. For example, when the communication device 1000 is a terminal and when the program or the instructions are executed by the processor 1001, the steps of the foregoing embodiments of the random access resource configuration method are implemented, with the same technical effects achieved. When the communication device 1000 is a network-side device and when the program or the instructions are executed by the processor 1001, the steps of the foregoing embodiments of the random access resource configuration method are implemented, with the same technical effects achieved. To avoid repetition, details are not described herein again.

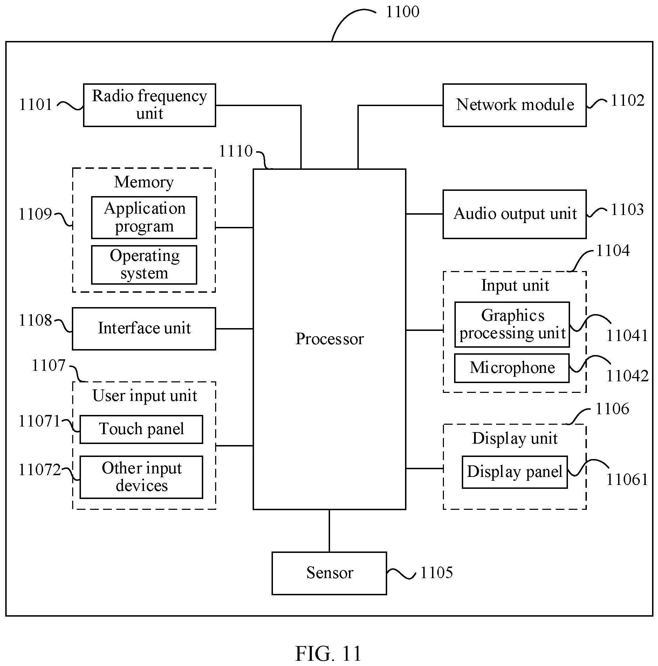

An embodiment of this application further provides a terminal, including a processor and a communication interface, where the processor is configured to determine an association relationship of RO resources in a first RO resource set and/or a second RO resource set, and the communication interface is configured to receive first configuration information from a network-side device, where the first configuration information is used for configuring a first RO resource set and/or a second RO resource set for random access signal repetition transmission; and determine N RO resources based on the association relationship of the RO resources in the first RO resource set and/or the second RO resource set to perform N random access signal repetition transmissions. The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then transmits the downlink data to the processor 1110 for processing. In addition, the radio frequency unit 1101 may transmit uplink data to the network-side device. Generally, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may include a first storage area for storing a program or instructions and a second storage area for storing data. The first storage area may store an operating system, an application program or instruction required by at least one function (for example, a sound playback function or an image playback function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1109 in the embodiments of this application includes but is not limited to these and any other suitable types of memories.

The processor 1110 may include one or more processing units. Optionally, an application processor and a modem processor may be integrated in the processor 1110. The application processor primarily processes operations involving an operating system, user interfaces, application programs, and the like. The modem processor primarily processes radio communication signals, for example, being a baseband processor. It can be understood that the modem processor may alternatively be not integrated in the processor 1110.

The radio frequency unit 1101 is configured to receive first configuration information from a network-side device, where the first configuration information is used for configuring a first RO resource set and/or a second RO resource set for random access signal repetition transmission.

The processor 1110 is configured to determine an association relationship of RO resources in the first RO resource set and/or the second RO resource set.

The radio frequency unit 1101 is further configured to determine N RO resources based on the association relationship of the RO resources in the first RO resource set and/or the second RO resource set to perform N random access signal repetition transmissions.

Further, the processor 1110 is configured to determine at least one of the following association relationships:

an association relationship between RO resources in the first RO resource set;
an association relationship between RO resources in the second RO resource set; and
an association relationship between RO resources in the first RO resource set and the second RO resource set.

This embodiment of this application can support random access signal repetition transmission for a larger repetition count and obtain better diversity gains. In addition, with combination of different RO resources, the system can efficiently utilize RO resources.

Based on the foregoing embodiment, further, the processor 1110 is configured to:

determine X first RO resources in the first RO resource set and Y second RO resources in the second RO resource set according to a first condition; and
determine an association relationship between the X first RO resources and the Y second RO resources; where
the first condition includes at least one of the following:

the first RO resource corresponds to a first SSB, and the second RO resource corresponds to a second SSB; and
the first RO resource and the second RO resource correspond to a same repetition count; where
X and Y are positive integers.

Further, the association relationship between the X first RO resources and the Y second RO resources is determined in at least one of the following manners:

being determined according to a predefined mapping criterion; and
being determined based on first mapping information, where the first mapping information is carried in the first configuration information.

Further, the predefined mapping criterion is related to at least one of the following:

a correspondence between a frequency domain multiplexing quantity of the first RO resources and a frequency domain multiplexing quantity of the second RO resources; and
a correspondence between time domain positions of the first RO resources being amplified or extended in time domain and time domain positions of the second RO resources.

Further, the processor 1110 is further configured to:

determine an association relationship between a first preamble resource set corresponding to first RO resources in the first RO resource set and a second preamble resource set corresponding to second RO resources in the second RO resource set; where
the first preamble resource set includes preamble resources used for random access signal repetition transmission on the first RO resource; and the second preamble resource set includes preamble resources used for random access signal repetition transmission on the second RO resource.

Further, each second RO resource is associated with $\lfloor X/Y \rfloor$ or $\lceil X/Y \rceil$ first RO resources, or each first RO resource is associated with $\lfloor Y/X \rfloor$ or $\lceil Y/X \rceil$ second RO resources.

Further, the processor 1110 is configured to:

sequentially associate, based on a second numbering sequence of the second preamble resources and a first numbering sequence of the first preamble resources, the second preamble resources with the first preamble resources, starting from a target second preamble resource; where
the second numbering sequence is determined based on indexes of the second preamble resources in the second preamble resource set, and the first numbering sequence is determined based on a value of RO index of the associated first RO resource and values of preamble indexes of the first preamble resources in the first preamble resource set.

Further, the target second preamble resource is the 1st second preamble resource in the second preamble resource set.

Further, the first mapping information is used to indicate at least one of the following:

an association relationship between the first SSB and the second SSB;
an association relationship between the X first RO resources and the Y second RO resources; and
the target second preamble resource.

Further, the association relationship between RO resources in the first RO resource set is determined based on at least one of the following:

first identification information corresponding to the RO resource;

the number of multiplexing times corresponding to the RO resource; and

an SSB corresponding to the RO resource.

Further, the association relationship between RO resources in the second RO resource set is determined based on at least one of the following:

second identification information corresponding to the RO resource;

the number of multiplexing times corresponding to the RO resource; and

an SSB corresponding to the RO resource.

Further, the radio frequency unit 1101 is configured to perform at least one of the following:

receiving a first message from the network-side device, where the first message is used for configuring the first RO resource set for random access signal repetition transmission for the terminal; and

receiving a second message from the network-side device, where the second message is used for configuring the second RO resource set for random access signal repetition transmission for the terminal.

Further, the first message includes at least one of the following:

a first preamble resource set corresponding to first RO resources in the first RO resource set, where the first preamble resource set includes first preamble resources for random access signal repetition transmission;

a repetition count corresponding to the first RO resource; and

first identification information corresponding to the first RO resource.

Further, the first identification information is used to indicate the repetition count corresponding to the first RO resource.

Further, different repetition counts correspond to first preamble resource sets that do not overlap with each other.

Further, the first preamble resource set corresponding to the first RO resources is determined based on at least one of the following:

the number of first preamble resources in the first preamble resource set;

a starting index of first preamble resources in the first preamble resource set; and

the total number of first preamble resources corresponding to the first RO resource set.

Further, the second message includes at least one of the following:

time domain information of second RO resources in the second RO resource set;

frequency domain information of the second RO resources;

information about an association between the second RO resources and SSBs;

a second preamble resource set corresponding to the second RO resources, where the second preamble resource set includes second preamble resources for random access signal repetition transmission;

a repetition count corresponding to the second RO resource; and

second identification information corresponding to the second RO resource.

Further, the frequency domain information of the second RO resource includes at least one of the following:

a frequency domain starting position; and
a frequency domain multiplexing quantity.

Further, in a case that the second message does not include the frequency domain information of the second RO resources, the frequency domain information of the first RO resources is reused as the frequency domain information of the second RO resources.

Further, the information about the association between the second RO resources and the SSBs includes:

a parameter of an association relationship from the SSB to the second RO resource; and

an SSB set corresponding to the second RO resource.

Further, in a case that the second message does not include the parameter of the association relationship from the SSB to the second RO resource, a parameter of an association relationship from the SSB to the first RO resource is reused as the parameter of the association relationship from the SSB to the second RO resource.

Further, the second identification information is used to indicate at least one of the following:

a repetition count corresponding to the second RO resource; and

an SSB or an SSB set associated with the second RO resource.

Further, the processor 1110 is further configured to: in a case that a first condition is met, determine to perform random access signal repetition transmission;

where
the first condition includes at least one of the following:

signal quality of the third SSB is lower than a first threshold, and the third SSB is an SSB used for random access signal repetition transmission; and the number of failures in executing a random access procedure reaches a second threshold.

Further, the radio frequency unit 1101 is configured to:

determine a repetition count based on signal quality of the third SSB;
determine N RO resources based on the third SSB, the repetition count, and the association relationship of the first RO resource set and/or the second RO resource set; and
perform N random access signal repetition transmissions by using the N RO resources.

This embodiment of this application can support random access signal repetition transmission for a larger repetition count and obtain better diversity gains. In addition, with combination of different RO resources, the system can efficiently utilize RO resources.

Based on the above embodiment, further, the second RO resource set is located in a separately configured BWP.

This embodiment of this application can support random access signal repetition transmission for a larger repetition count and obtain better diversity gains.

An embodiment of this application further provides a network-side device, including a processor and a communication interface. The processor is configured to determine an association relationship of RO resources in a first RO resource set and/or a second RO resource set. The communication interface is configured to transmit first configuration information to a terminal, where the first configuration information is used for configuring the first RO resource set and/or the second RO resource set for random access signal repetition transmission; and receive N random access signal repetition transmissions from the terminal on N RO resources. The network-side device embodiments correspond to the foregoing network-side device method embodiments, and the implementation processes and implementations of the foregoing method embodiments can be applied to the network-side device embodiments, with the same technical effects achieved.

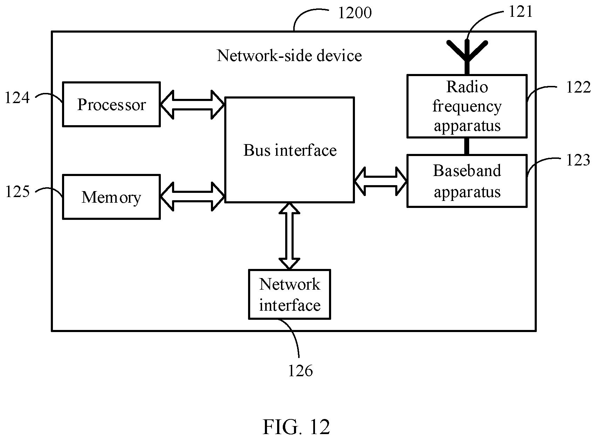

Specifically, an embodiment of this application further provides a network-side device. As shown in FIG. 12, the network-side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information by using the antenna 121, and transmits the received information to the baseband apparatus 123 for processing. In a downlink direction, the baseband apparatus 123 processes to-be-transmitted information, and transmits the information to the radio frequency apparatus 122; and the radio frequency apparatus 122 processes the received information and then transmits the information out by using the antenna 121.

The method executed by the network-side device in the foregoing embodiments can be implemented in the baseband apparatus 123, and the baseband apparatus 123 includes a baseband processor.

The baseband apparatus 123 may include, for example, at least one baseband board, where a plurality of chips are disposed on the baseband board. As shown in FIG. 12, one of the chips is, for example, a baseband processor, and is connected to the memory 125 through the bus interface, to invoke a program in the memory 125 to perform the operations of the network device shown in the foregoing method embodiments.

The network-side device may further include a network interface 126, where the interface is, for example, a common public radio interface (common public radio interface, CPRI).

Specifically, the network-side device 1200 in this embodiment of the present invention further includes: instructions or a program stored in the memory 125 and capable of running on the processor 124. The processor 124 invokes the instructions or program in the memory 125 to execute the method executed by the modules shown in FIG. 6, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the random access resource configuration method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions of a network device to implement the processes of the foregoing embodiments of the random access resource configuration method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing random access resource configuration method embodiments, with the same technical effects achieved. To avoid repetition, details are not repeated herein.

An embodiment of this application further provides a random access resource configuration system, including a terminal and a network-side device, where the terminal can be configured to execute the steps of the foregoing embodiments of the random access resource configuration method, and the network-side device can be configured to execute the steps of the foregoing embodiments of the random access resource configuration method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A random access resource configuration method, comprising:

   receiving, by a terminal, first configuration information from a network-side device, wherein the first configuration information is used for configuring a first random access occasion resource set and/or a second random access occasion resource set for random access signal repetition transmission;
   determining, by the terminal, an association relationship of random access occasion resources in the first random access occasion resource set and/or the second random access occasion resource set; and
   determining, by the terminal, N random access occasion resources based on the association relationship of the random access occasion resources in the first random access occasion resource set and/or the second random access occasion resource set to perform N random access signal repetition transmissions; wherein the first random access occasion resource set comprises at least one of the following random access occasion resources:

      a random access occasion resource for 4-step random access;
      a random access occasion resource for 2-step random access; and
      a random access occasion resource for 4-step random access for message 3 repetition transmission; and
      the second random access occasion resource set comprises dedicated random access occasion resources for random access signal repetition transmission; wherein N is a positive integer.

2. The method according to claim 1, wherein the determining an association relationship of random access occasion resources in the first random access occasion resource set and/or the second random access occasion resource set comprises determining at least one of the following association relationships:

> an association relationship between random access occasion resources in the first random access occasion resource set;
> an association relationship between random access occasion resources in the second random access occasion resource set; and
> an association relationship between random access occasion resources in the first random access occasion resource set and the second random access occasion resource set.

3. The method according to claim 2, wherein the determining an association relationship between random access occasion resources in the first random access occasion resource set and the second random access occasion resource set comprises:

> determining X first random access occasion resources in the first random access occasion resource set and Y second random access occasion resources in the second random access occasion resource set according to a first condition; and
> determining an association relationship between the X first random access occasion resources and the Y second random access occasion resources; wherein
> the first condition comprises at least one of the following:

> > the first random access occasion resource corresponds to a first synchronization signal block, and the second random access occasion resource corresponds to a second synchronization signal block; and
> > the first random access occasion resource and the second random access occasion resource correspond to a same random access signal repetition count; wherein X and Y are positive integers.

4. The method according to claim 3, wherein the association relationship between the X first random access occasion resources and the Y second random access occasion resources is determined in at least one of the following manners:

> being determined according to a predefined mapping criterion; and
> being determined based on first mapping information, wherein the first mapping information is carried in the first configuration information.

5. The method according to claim 4, wherein the predefined mapping criterion is related to at least one of the following:

> a correspondence between a frequency domain multiplexing quantity of the first random access occasion resources and a frequency domain multiplexing quantity of the second random access occasion resources; and
> a correspondence between time domain positions of the first random access occasion resources being amplified or extended in time domain and time domain positions of the second random access occasion resources.

6. The method according to claim 2, wherein the determining an association relationship between random access occasion resources in the first random access occasion resource set and the second random access occasion resource set further comprises:

> determining an association relationship between a first preamble resource set corresponding to first random access occasion resources in the first random access occasion resource set and a second preamble resource set corresponding to second random access occasion resources in the second random access occasion resource set; wherein
> the first preamble resource set comprises preamble resources used for random access signal repetition transmission on the first random access occasion resource; and the second preamble resource set comprises preamble resources used for random access signal repetition transmission on the second random access occasion resource.

7. The method according to claim 3, wherein each second random access occasion resource is associated with $\lfloor X/Y \rfloor$ or $\lceil X/Y \rceil$ first random access occasion resources, or each first random access occasion resource is associated with $\lfloor Y/X \rfloor$ or $\lceil Y/X \rceil$ second random access occasion resources.

8. The method according to claim 6, wherein the determining an association relationship between a first preamble resource set corresponding to first random access occasion resources in the first random access occasion resource set and a second preamble resource set corresponding to second random access occasion resources in the second random access occasion resource set is performed in the following manner:

> sequentially associating, based on a second numbering sequence of the second preamble resources and a first numbering sequence of the first preamble resources, the second preamble resources with the first preamble resources, starting from a target second preamble resource; wherein
> the second numbering sequence is determined based on indexes of the second preamble resources in the second preamble resource set, and the first numbering sequence is determined based on a random access occasion number of the associated first random access occasion resource and preamble indexes of the first preamble resources in the first preamble resource set.

9. The method according to claim 8, wherein the target second preamble resource is the 1st second preamble resource in the second preamble resource set.

10. The method according to claim 4, wherein the first mapping information is used to indicate at least one of the following:

> an association relationship between the first synchronization signal block and the second synchronization signal block;
> an association relationship between the X first random access occasion resources and the Y second random access occasion resources; and
> the target second preamble resource.

11. The method according to claim 2, wherein the association relationship between random access occasion resources in the first random access occasion resource set is determined based on at least one of the following:

> first identification information corresponding to the random access occasion resource;
> the number of multiplexing times corresponding to the random access occasion resource; and
> a synchronization signal block corresponding to the random access occasion resource.

12. The method according to claim 2, wherein the association relationship between random access occasion resources in the second random access occasion resource set is determined based on at least one of the following:

> second identification information corresponding to the random access occasion resource;

the number of multiplexing times corresponding to the random access occasion resource; and
a synchronization signal block corresponding to the random access occasion resource.

13. The method according to claim 1, wherein the receiving, by a terminal, first configuration information from a network-side device comprises at least one of the following:

> receiving, by the terminal, a first message from the network-side device, wherein the first message is used for configuring the first random access occasion resource set for random access signal repetition transmission for the terminal; and
> receiving, by the terminal, a second message from the network-side device, wherein the second message is used for configuring the second random access occasion resource set for random access signal repetition transmission for the terminal.

14. The method according to claim 13, wherein the first message comprises at least one of the following:

> a first preamble resource set corresponding to first random access occasion resources in the first random access occasion resource set, wherein the first preamble resource set comprises first preamble resources for random access signal repetition transmission;
> a repetition count corresponding to the first random access occasion resource; and
> first identification information corresponding to the first random access occasion resource.

15. The method according to claim 14, wherein the first identification information is used to indicate the repetition count corresponding to the first random access occasion resource.

16. The method according to claim 14, wherein the first preamble resource set corresponding to the first random access occasion resources is determined based on at least one of the following:

> the number of first preamble resources in the first preamble resource set;
> a starting index of the first preamble resources in the first preamble resource set; and
> the total number of first preamble resources corresponding to the first random access occasion resource set.

17. The method according to claim 13, wherein the second message comprises at least one of the following:

time domain information of second random access occasion resources in the second random access occasion resource set;

frequency domain information of the second random access occasion resources;

information about an association between the second random access occasion resources and synchronization signal blocks;

a second preamble resource set corresponding to the second random access occasion resources, wherein the second preamble resource set comprises second preamble resources for random access signal repetition transmission;

a repetition count corresponding to the second random access occasion resource; and

second identification information corresponding to the second random access occasion resource; wherein

the frequency domain information of the second random access occasion resource comprises at least one of the following:

a frequency domain starting position; and
a frequency domain multiplexing quantity.

18. The method according to claim 17, wherein the information about the association between the second random access occasion resources and the synchronization signal blocks comprises:

a parameter of an association relationship from the synchronization signal block to the second random access occasion resource; and
a synchronization signal block set corresponding to the second random access occasion resource.

19. The method according to claim 18, wherein in a case that the second message does not comprise the parameter of the association relationship from the synchronization signal block to the second random access occasion resource, a parameter of an association relationship from the synchronization signal block to the first random access occasion resource is reused as the parameter of the association relationship from the synchronization signal block to the second random access occasion resource.

20. The method according to claim 17, wherein the second identification information is used to indicate at least one of the following:

a repetition count corresponding to the second random access occasion resource; and
a synchronization signal block or a synchronization signal block set associated with the second random access occasion resource.

21. The method according to claim 1, wherein the second random access occasion resource set is located in a separately configured BWP.

22. The method according to claim 1, wherein before the determining, by the terminal, N random access occasion resources based on the association relationship of the first random access occasion resource set and/or the second random access occasion resource set to perform N random access signal repetition transmissions, the method further comprises:

in a case that a first condition is met, determining, by the terminal, to perform random access signal repetition transmission; wherein the first condition comprises at least one of the following:

signal quality of the third synchronization signal block is lower than a first threshold, and the third synchronization signal block is a synchronization signal block used for random access signal repetition transmission; and
the number of failures in executing a random access procedure reaches a second threshold.

23. The method according to claim 1, wherein the determining, by the terminal, N random access occasion resources based on the association relationship of the first random access occasion resource set and/or the second random access occasion resource set to perform N random access signal repetition transmissions comprises:

determining, by the terminal, a repetition count based on signal quality of the third synchronization signal block;
determining N random access occasion resources based on the third synchronization signal block, the repetition count, and the association relationship of the first random access occasion resource set and/or the second random access occasion resource set; and
performing N random access signal repetition transmissions by using the N random access occasion resources.

24. A random access resource configuration apparatus, comprising:

a receiving module, configured to receive first configuration information from a network-side device, wherein the first configuration information is used for configuring a first random access occasion resource set and/or a second random access occasion resource set for random access signal repetition transmission;

an association module, configured to determine an association relationship of random access occasion resources in the first random access occasion resource set and/or the second random access occasion resource set; and

a transmission module, configured to determine N random access occasion resources based on the association relationship of the random access occasion resources in the first random access occasion resource set and/or the second random access occasion resource set to perform N random access signal repetition transmissions; wherein

the first random access occasion resource set comprises at least one of the following random access occasion resources:

> a random access occasion resource for 4-step random access;
> a random access occasion resource for 2-step random access; and
> a random access occasion resource for 4-step random access for message 3 repetition transmission; and

> the second random access occasion resource set comprises dedicated random access occasion resources for random access signal repetition transmission; wherein N is a positive integer.

25. A random access resource configuration method, comprising:

> transmitting, by a network-side device, first configuration information to a terminal, wherein the first configuration information is used for configuring a first random access occasion resource set and/or a second random access occasion resource set for random access signal repetition transmission;

> determining, by the network-side device, an association relationship of random access occasion resources in the first random access occasion resource set and/or the second random access occasion resource set; and

> receiving, by the network-side device, N random access signal repetition transmissions from the terminal on N random access occasion resources; wherein

> the N random access occasion resources are determined based on an association relationship of the first random access occasion resource set and/or the second random access occasion resource set;

> the first random access occasion resource set comprises at least one of the following random access occasion resources:

> a random access occasion resource for 4-step random access;
> a random access occasion resource for 2-step random access; and
> a random access occasion resource for 4-step random access for message 3 repetition transmission; and

> the second random access occasion resource set comprises dedicated random access occasion resources for random access signal repetition transmission; wherein N is a positive integer.

26. The method according to claim 25, wherein the determining an association relationship of random access occasion resources in the first random access occasion resource set and/or the second random access occasion resource set comprises determining at least one of the following association relationships:

> an association relationship between random access occasion resources in the first random access occasion resource set;
> an association relationship between random access occasion resources in the second random access occasion resource set; and
> an association relationship between random access occasion resources in the first random access occasion resource set and the second random access occasion resource set.

27. The method according to claim 26, wherein the determining an association relationship between random access occasion resources in the first random access occasion resource set and the second random access occasion resource set comprises:

> determining X first random access occasion resources in the first random access occasion resource set and Y second random access occasion resources in the second random access occasion resource set according to a first condition; and
> determining an association relationship between the X first random access occasion resources and the Y second random access occasion resources; wherein
> the first condition comprises at least one of the following:

> the first random access occasion resource corresponds to a first synchronization signal block, and the second random access occasion resource corresponds to a second synchronization signal block; and

the first random access occasion resource and the second random access occasion resource correspond to a same repetition count; wherein
X and Y are positive integers.

28. The method according to claim 27, wherein the association relationship between the X first random access occasion resources and the Y second random access occasion resources is determined in at least one of the following manners:

being determined according to a predefined mapping criterion; and
being determined based on first mapping information, wherein the first mapping information is carried in the first configuration information.

29. The method according to claim 28, wherein the predefined mapping criterion is related to at least one of the following:

a correspondence between a frequency domain multiplexing quantity of the first random access occasion resources and a frequency domain multiplexing quantity of the second random access occasion resources; and
a correspondence between time domain positions of the first random access occasion resources being amplified or extended in time domain and time domain positions of the second random access occasion resources.

30. The method according to claim 26, wherein the determining an association relationship between random access occasion resources in the first random access occasion resource set and the second random access occasion resource set further comprises:

determining an association relationship between a first preamble resource set corresponding to first random access occasion resources in the first random access occasion resource set and a second preamble resource set corresponding to second random access occasion resources in the second random access occasion resource set; wherein
the first preamble resource set comprises preamble resources used for random access signal repetition transmission on the first random access occasion resource; and the second preamble resource set comprises preamble resources used for random access signal repetition transmission on the second random access occasion resource.

31. The method according to claim 27, wherein each second random access occasion resource is associated with $\lfloor X/Y \rfloor$ or $\lceil X/Y \rceil$ first random access occasion resources, or each first random access occasion resource is associated with $\lfloor Y/X \rfloor$ or $\lceil Y/X \rceil$ second random access occasion resources.

32. The method according to claim 30, wherein the determining an association relationship between a first preamble resource set corresponding to first random access occasion resources in the first random access occasion resource set and a second preamble resource set corresponding to second random access occasion resources in the second random access occasion resource set is performed in the following manner:

sequentially associating, based on a second numbering sequence of the second preamble resources and a first numbering sequence of the first preamble resources, the second preamble resources with the first preamble resources, starting from a target second preamble resource; wherein
the second numbering sequence is determined based on indexes of the second preamble resources in the second preamble resource set, and the first numbering sequence is determined based on a random access occasion number of the associated first random access occasion resource and preamble indexes of the first preamble resources in the first preamble resource set.

33. The method according to claim 32, wherein the target second preamble resource is the 1st second preamble resource in the second preamble resource set.

34. The method according to claim 28, wherein the first mapping information is used to indicate at least one of the following:

an association relationship between the first synchronization signal block and the second synchronization signal block;
an association relationship between the X first random access occasion resources and the Y second random access occasion resources; and
the target second preamble resource.

35. The method according to claim 26, wherein the association relationship between random access occasion resources in the first random access occasion resource set is determined based on at least one of the following:

first identification information corresponding to the random access occasion resource;
the number of multiplexing times corresponding to the random access occasion resource; and
a synchronization signal block corresponding to the random access occasion resource.

36. The method according to claim 26, wherein the association relationship between random access occasion resources in the second random access occasion resource set is determined based on at least one of the following:

second identification information corresponding to the random access occasion resource;
the number of multiplexing times corresponding to the random access occasion resource; and
a synchronization signal block corresponding to the random access occasion resource.

37. The method according to claim 27, wherein the transmitting, by a network-side device, first configuration information to a terminal comprises at least one of the following:

transmitting, by the network-side device, a first message to the terminal, wherein the first message is used for configuring the first random access occasion resource set for random access signal repetition transmission for the terminal; and
transmitting, by the network-side device, a second message to the terminal, wherein the second message is used for configuring the second random access occasion resource set for random access signal repetition transmission for the terminal.

38. The method according to claim 37, wherein the first message comprises at least one of the following:

a first preamble resource set corresponding to first random access occasion resources in the first random access occasion resource set, wherein the first preamble resource set comprises first preamble resources for random access signal repetition transmission;
a repetition count corresponding to the first random access occasion resource; and
first identification information corresponding to the first random access occasion resource.

39. The method according to claim 38, wherein the first identification information is used to indicate the repetition count corresponding to the first random access occasion resource.

40. The method according to claim 38, wherein different repetition counts correspond to first preamble resource sets that do not overlap with each other.

41. The method according to claim 38, wherein the first preamble resource set corresponding to the first random access occasion resources is determined based on at least one of the following:

the number of first preamble resources in the first preamble resource set;
a starting index of the first preamble resources in the first preamble resource set; and
the total number of first preamble resources corresponding to the first random access occasion resource set.

42. The method according to claim 37, wherein the second message comprises at least one of the following:

time domain information of second random access occasion resources in the second random access occasion resource set;
frequency domain information of the second random access occasion resources;
information about an association between the second random access occasion resources and synchronization signal blocks;
a second preamble resource set corresponding to the second random access occasion resources, wherein the second preamble resource set comprises second preamble resources for random access signal repetition transmission;
a repetition count corresponding to the second random access occasion resource; and
second identification information corresponding to the second random access occasion resource.

43. The method according to claim 42, wherein the frequency domain information of the second random access occasion resource comprises at least one of the following:

a frequency domain starting position; and
a frequency domain multiplexing quantity.

44. The method according to claim 42, wherein in a case that the second message does not comprise the frequency domain information of the second random access occasion resources, the frequency domain information of the first random access occasion resources is reused as the frequency domain information of the second random access occasion resources.

**45.** The method according to claim 42, wherein the information about the association between the second random access occasion resources and the synchronization signal blocks comprises:

a parameter of an association relationship from the synchronization signal block to the second random access occasion resource; and
a synchronization signal block set corresponding to the second random access occasion resource.

**46.** The method according to claim 45, wherein in a case that the second message does not comprise the parameter of the association relationship from the synchronization signal block to the second random access occasion resource, a parameter of an association relationship from the synchronization signal block to the first random access occasion resource is reused as the parameter of the association relationship from the synchronization signal block to the second random access occasion resource.

**47.** The method according to claim 42, wherein the second identification information is used to indicate at least one of the following:

a repetition count corresponding to the second random access occasion resource; and
a synchronization signal block or a synchronization signal block set associated with the second random access occasion resource.

**48.** The method according to claim 25, wherein the second random access occasion resource set is located in a separately configured BWP.

**49.** A random access resource configuration apparatus, comprising:

a transmitting module, configured to transmit first configuration information to a terminal, wherein the first configuration information is used for configuring a first random access occasion resource set and/or a second random access occasion resource set for random access signal repetition transmission;
an execution module, configured to determine an association relationship of random access occasion resources in the first random access occasion resource set and/or the second random access occasion resource set; and
an access module, configured to receive N random access signal repetition transmissions from the terminal on N random access occasion resources; wherein
the N random access occasion resources are determined based on an association relationship of the first random access occasion resource set and/or the second random access occasion resource set;
the first random access occasion resource set comprises at least one of the following random access occasion resources:

a random access occasion resource for 4-step random access;
a random access occasion resource for 2-step random access; and
a random access occasion resource for 4-step random access for message 3 repetition transmission; and
the second random access occasion resource set comprises dedicated random access occasion resources for random access signal repetition transmission; wherein
N is a positive integer.

**50.** A terminal, comprising a processor and a memory, wherein a program or instructions capable of running on the processor are stored in the memory, and when the program or the instructions are executed by the processor, the steps of the random access resource configuration method according to any one of claims 1 to 23 are implemented.

**51.** A network-side device, comprising a processor and a memory, wherein a program or instructions capable of running on the processor are stored in the memory, and when the program or the instructions are executed by the processor, the steps of the random access resource configuration method according to any one of claims 25 to 48 are implemented.

**52.** A readable storage medium, wherein the readable storage medium stores a program or instructions, and when the program or instructions are executed by a processor, the steps of the random access resource configuration method according to any one of claims 1 to 23 are implemented, or the steps of the random access resource configuration method according to any one of claims 25 to 48 are implemented.

FIG. 1

S210

A terminal receives first configuration information from a network-side device, where the first configuration information is used for configuring a first random access occasion resource set and/or a second random access occasion resource set for random access signal repetition transmission

S220

The terminal determines an association relationship of random access occasion resources in the first random access occasion resource set and/or the second random access occasion resource set

S230

The terminal determines N random access occasion resources based on the association relationship of the random access occasion resources in the first random access occasion resource set and/or the second random access occasion resource set to perform N random access signal repetition transmissions

FIG. 2

Resource configuration period

Repetition
count N0

Repetition
count N1

Repetition
count N2

| RO resource for 4-step RACH | RO resource for 4-step RACH | RO resource for 4-step RACH |
|---|---|---|
| RO resource for 2-step RACH | RO resource for 2-step RACH | RO resource for 2-step RACH |
| RO resource for 4-step RACH for Msg3 repetition | RO resource for 4-step RACH for Msg3 repetition | RO resource for 4-step RACH for Msg3 repetition |

FIG. 3

S211

A terminal receives a first message from a network-side device, where the first message is used for configuring a first RO resource set for random access signal repetition transmission for the terminal

S212

The terminal receives a second message from the network-side device, where the second message is used for configuring a second RO resource set for random access signal repetition transmission for the terminal

S221

Determine an association relationship between RO resources in the first RO resource set and the second RO resource set

S231

The terminal determines a repetition count based on signal quality of a third SSB

S232

Determine N RO resources based on the third SSB, the random access signal repetition count, and the association relationship of the first RO resource set and/ or the second RO resource set

S233

Perform N PRACH repetition transmissions by using the N RO resources

FIG. 4

First RO resources
corresponding to SSB$_i$

FIG. 5

First RO resources
corresponding to SSB$_i$

Second RO resources
corresponding to SSB$_i$

Association relationship between a
second preamble resource and a first
preamble resource

Preamble index

FIG. 6

Random access resource
configuration apparatus                701

Receiving module

702

Association module

703

Transmission module

FIG. 7

S810

A network-side device transmits first configuration information to a
terminal, where the first configuration information is used for
configuring a first RO resource set and/or a second RO resource set for
random access signal repetition transmission

S820

The network-side device determines an association relationship of RO
resources in the first RO resource set and/or the second RO resource set

S830

The network-side device receives N random access signal repetition
transmissions from the terminal on N RO resources

FIG. 8

FIG. 9

FIG. 10

FIG. 11

FIG. 12

# EP 4 507 425 A1

<table>
<tr><td colspan="2"><strong>INTERNATIONAL SEARCH REPORT</strong></td><td colspan="2">International application No.<br><strong>PCT/CN2023/085798</strong></td></tr>
</table>

**A.    CLASSIFICATION OF SUBJECT MATTER**

H04W72/04(2023.01)i;  H04W74/08(2009.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE; 3GPP: 随机接入资源, 配置, 随机接入时机资源集合, 同步信号块, 关联, 相关, 重复传输, RACH Occasion, RO, set, configuration, SSB, association, repetition

**C.    DOCUMENTS CONSIDERED TO BE RELEVANT**

| Category* | Citation of document, with indication, where appropriate, of the relevant passages | Relevant to claim No. |
|---|---|---|
| X | CN 114246015 A (QUALCOMM INC.) 25 March 2022 (2022-03-25)<br>  description, paragraphs [0010], [0018], [0210]-[0234], [0247], and [0248] | 1-52 |
| A | CN 114080048 A (RESEARCH INSTITUTE OF CHINA MOBILE COMMUNICATIONS CORP. et al.) 22 February 2022 (2022-02-22)<br>  entire document | 1-52 |
| A | CN 111867129 A (VIVO MOBILE COMMUNICATIONS CO., LTD.) 30 October 2020 (2020-10-30)<br>  entire document | 1-52 |
| A | WO 2021221381 A1 (INNOVATIVE TECHNOLOGY LAB CO., LTD.) 04 November 2021 (2021-11-04)<br>  entire document | 1-52 |
| A | HUAWEI et al. "RACH Procedures and Resource Configuration"<br>*3GPP TSG RAN WG1 Meeting #88, R1-1701724*, 17 February 2017 (2017-02-17),<br>  entire document | 1-52 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2023** | **15 June 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

44

**INTERNATIONAL SEARCH REPORT**
Information on patent family members

International application No.

**PCT/CN2023/085798**

| Patent document cited in search report | | | Publication date (day/month/year) | Patent family member(s) | | | Publication date (day/month/year) |
|---|---|---|---|---|---|---|---|
| CN | 114246015 | A | 25 March 2022 | WO | 2021026710 | A1 | 18 February 2021 |
| | | | | EP | 4014671 | A1 | 22 June 2022 |
| | | | | US | 2022330348 | A1 | 13 October 2022 |
| | | | | WO | 2021027798 | A1 | 18 February 2021 |
| CN | 114080048 | A | 22 February 2022 | None | | | |
| CN | 111867129 | A | 30 October 2020 | None | | | |
| WO | 2021221381 | A1 | 04 November 2021 | KR | 20210133423 | A | 08 November 2021 |
| | | | | US | 2023085104 | A1 | 16 March 2023 |
| | | | | EP | 4145942 | A1 | 08 March 2023 |
| | | | | CN | 115516991 | A | 23 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210346938